# EUROPEAN PATENT SPECIFICATION

(11) **EP 4 601 790 B1**
(45) Date of publication and mention of the grant of the patent: **08.07.2026**
(21) Application number: 23776381.8
(22) Date of filing: 25.09.2023
(51) Int. Cl.: B01J 31/02, B01J 31/22, C01C 1/02

(54) **CATALYTIC COMPOSITIONS**
KATALYTISCHE ZUSAMMENSETZUNGEN
COMPOSITIONS CATALYTIQUES

(30) Priority: 13.10.2022 EP 22201386
(43) Date of publication of application: 20.08.2025
(73) Proprietor: Universität Heidelberg, 69117 Heidelberg (DE)
(72) Inventor: STRAUB, Bernd Franz, 69120 Heidelberg (DE); HEINRICH, Florian, 69120 Heidelberg (DE); SCHWARZ, Julia, 69120 Heidelberg (DE); REISCHENBACH, Philipp, 69120 Heidelberg (DE)
(74) Representative: Müller-Boré & Partner Patentanwälte PartG mbB
(86) International application number: PCT/EP2023/076363
(87) International publication number: WO 2024/078851

(56) References cited:
- TANABE YOSHIAKI ET AL: "Recent advances in nitrogen fixation upon vanadium complexes", COORDINATION CHEMISTRY REVIEWS, vol. 381, 12 December 2018 (2018-12-12), pages 135 - 150, XP085556604, ISSN: 0010-8545, DOI: 10.1016/J.CCR.2018.11.005
- YOSHIYA SEKIGUCHI ET AL: "Catalytic Reduction of Molecular Dinitrogen to Ammonia and Hydrazine Using Vanadium Complexes", ANGEWANDTE CHEMIE, WILEY - V C H VERLAG GMBH & CO. KGAA, DE, vol. 130, no. 29, 20 April 2018 (2018-04-20), pages 9202 - 9206, XP071375012, ISSN: 0044-8249, DOI: 10.1002/ANGE.201802310

## Description

The present invention relates to catalytic compositions containing a vanadium compound, a pre-ligand, and a metal base. Moreover, the present invention relates to the uses of such catalytic compositions and methods for activating N₂ such as producing NH₃ from the elements N₂ and H₂ using such a catalytic composition.

Since the industrial revolution the world population steadily increases. Due to this progression, food production has to meet increased demands, which leads to a greater demand of fertilizers including nitrogen compounds. The most abundant nitrogen source is gaseous nitrogen which can be used to produce NH₃. Conventionally the Haber Bosch process is used for NH₃ production employing a Fe-based catalyst at high temperatures and pressures. Due to the high energy demand of the Haber Bosch process, alternative catalysts are researched. In view of the above, barium promoted Ru-based catalysts (Non-patent literature (NPL) 1) have been provided and tested for their NH₃ production capability. Such catalysts exhibit an increased catalytic activity compared to conventional Fe-based catalysts.

Furthermore, other metals are promising for N₂ activation including vanadium. V-based catalysts are promising candidates due to the vanadium's ability to exist in various oxidation states. Thus, V-based catalysts for the production of NH₃ have been prepared (NPL 2). However, application of the known V-based catalysts for NH₃ production requires the addition of the strong reducing agent potassium graphite (KCs) and the strong Brookhart's acid as proton donor in excess.
Non-patent literature 1: Bielawa, H. et al. Angew. Chem. Int. Ed. 2001, 40, 1061-1063.
Non-patent literature 2: Sekiguchi, Y. et al. Angew. Chem. Int. Ed. 2018, 57, 9064-9068.

However, the methods for producing NH₃ according to NPL 1 and 2 have several disadvantages. Application of a Ru-based catalyst as disclosed in NPL 1 still requires exceptionally high temperatures of around 300 °C which correlates with high energy costs. The V-based catalyst of NPL 2 is usable at low temperatures but, however, requires expensive and aggressive reducing agent and acid in high excess to be active.

Thus, an objective of the present invention is to provide a catalytic matter which is suitable for N₂ activation and reactions of N₂ and other substrates. In addition, a method for NH₃ production from the elements N₂ and H₂ should be provided, working at low temperatures and pressures and not requiring expensive reducing agents or proton donors.

The present inventors conducted extensive quantum-chemical, organic-synthetic, inorganic-synthetic and catalytic research to provide a solution to the above problems and found that the NH₃ production from N₂ and H₂ is possible using a catalytic composition comprising a thermostable pre-ligand with 4,5-bis(*ortho-*hydroxyphenyl)imidazole side arms, a vanadium compound, and a metal base. The essence of the invention of an energetically balanced catalytic N₂ activation mechanism is a reversible and facile N-N bond cleavage. The polarizing effect of alkaline or earth alkaline metals that coordinate at the two nitrogen atoms imparts a kinetic low barrier to a thermodynamic near-equilibrium of a divanadium(IV) hydrazide on the one side and two vanadium(V) nitrides on the other side. The vanadium centers have to be sterically shielded by bulky substituents at the ligand to prevent aggregation by bridging µ-nitride or µ-imidate or µ-oxide ligands, and to thus prevent deactivation of the mandatory coordinatively active vanadium centers.

Specifically, the object underlying the present invention is solved by a catalytic composition, comprising
a vanadium compound, preferably a molecular vanadium oxide halide complex, such as e.g. VOCl₂(dioxane)₂ or VOCl₂(N-morpholine)₂,
a pre-ligand represented by the following formulas (1) to (23), and a metal base: 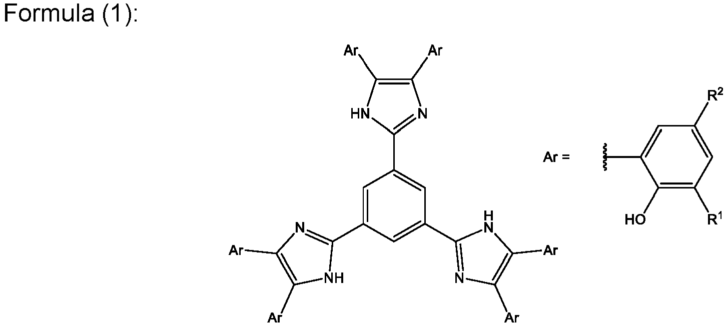 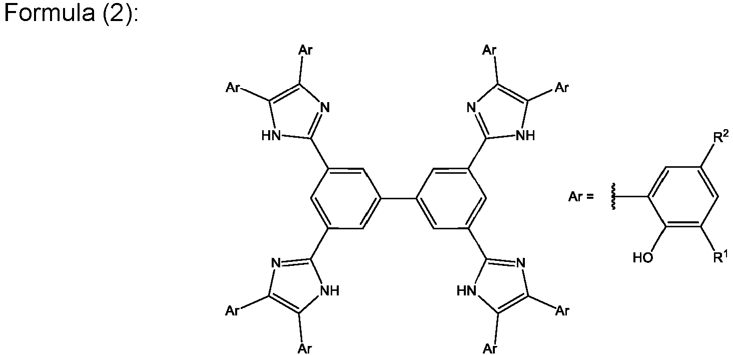 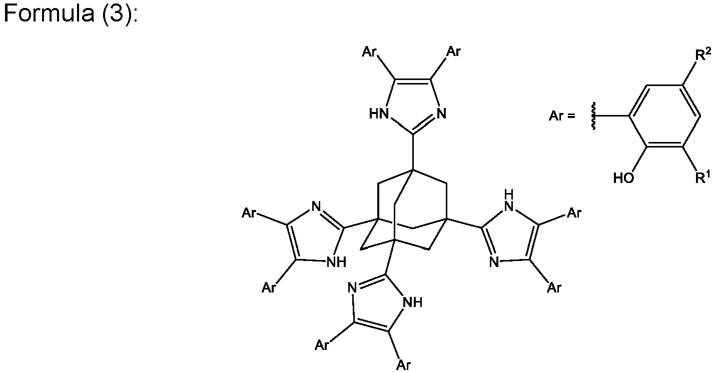 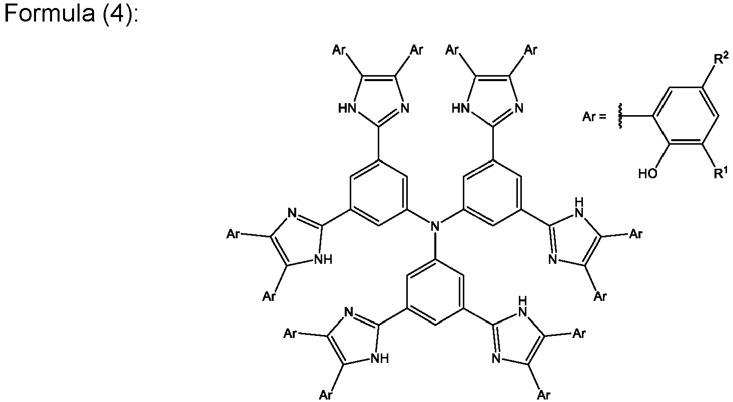 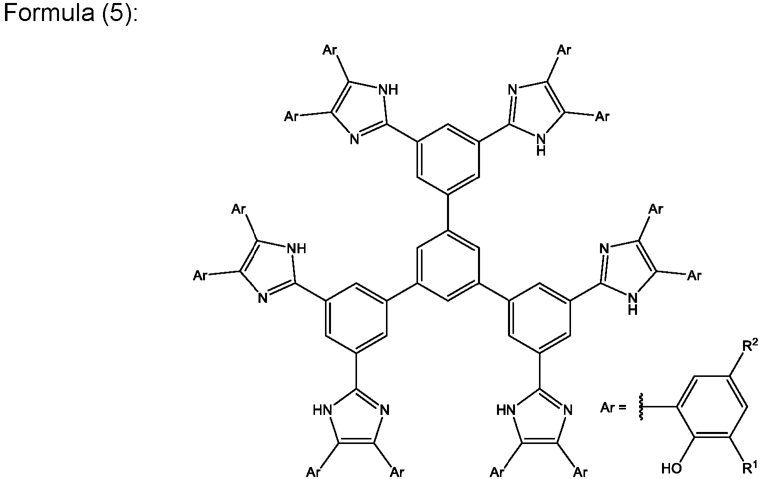 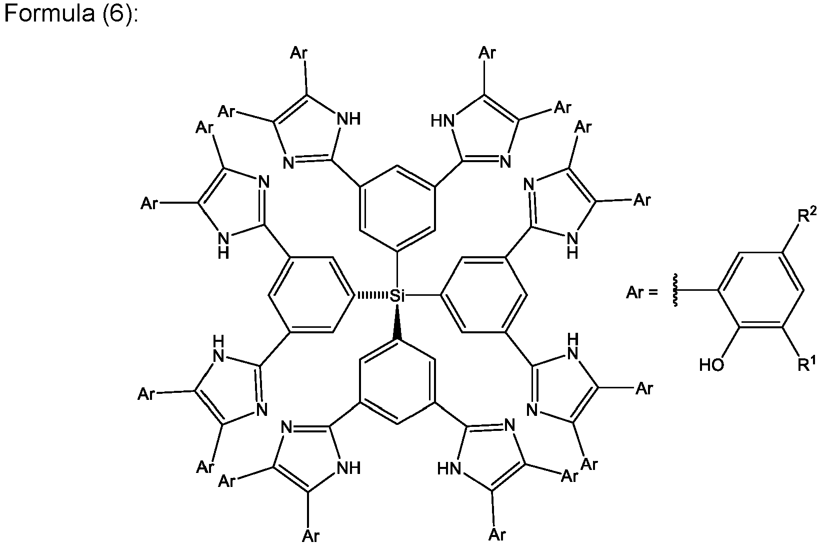 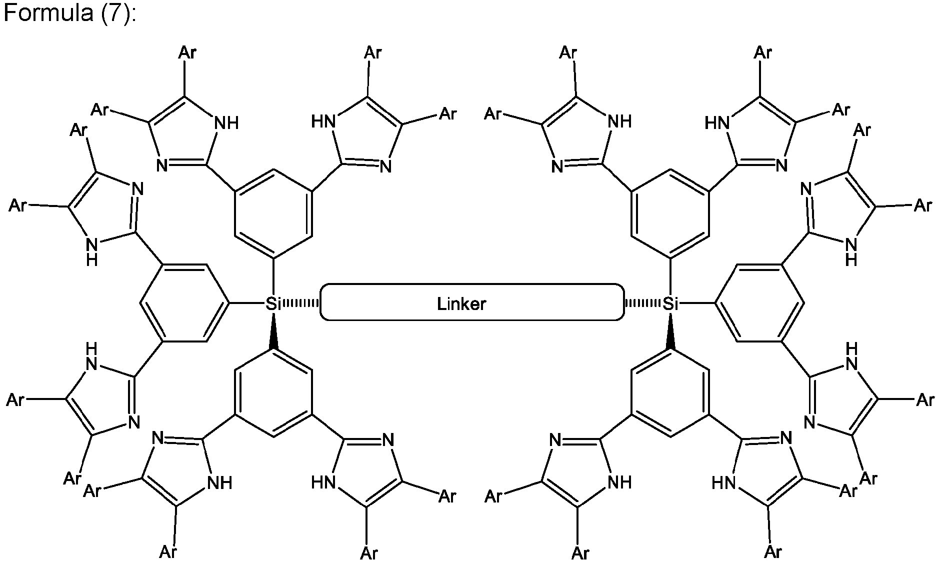 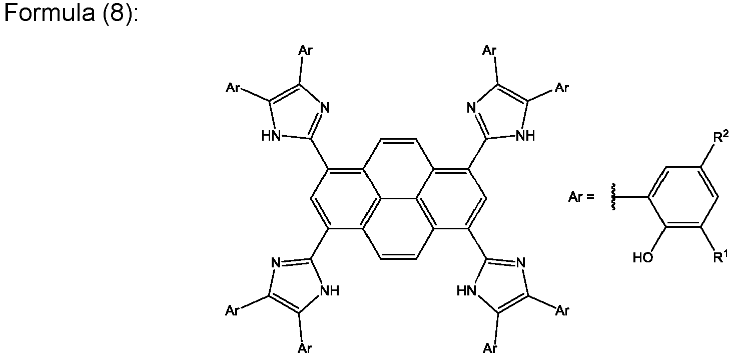 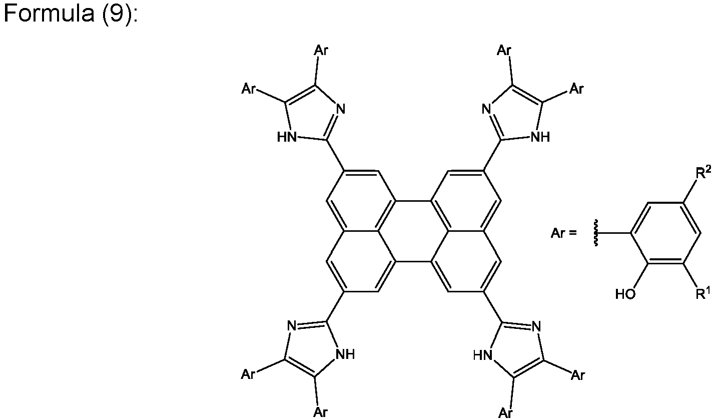 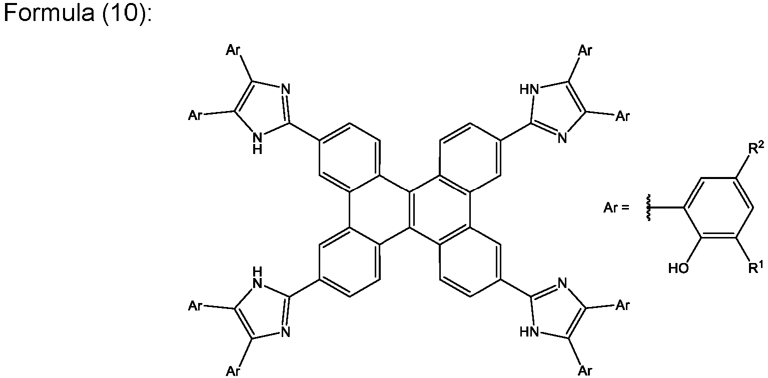 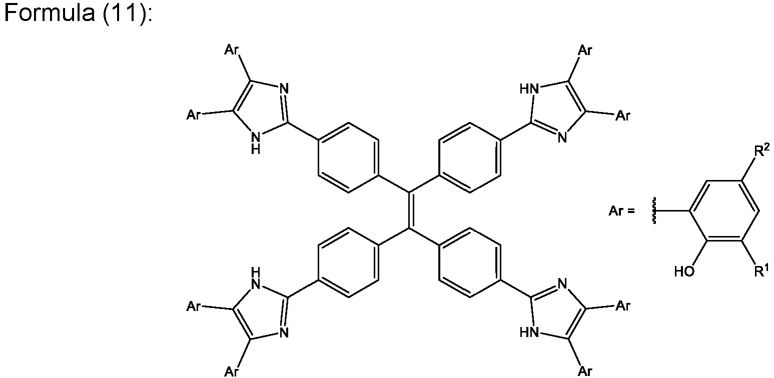 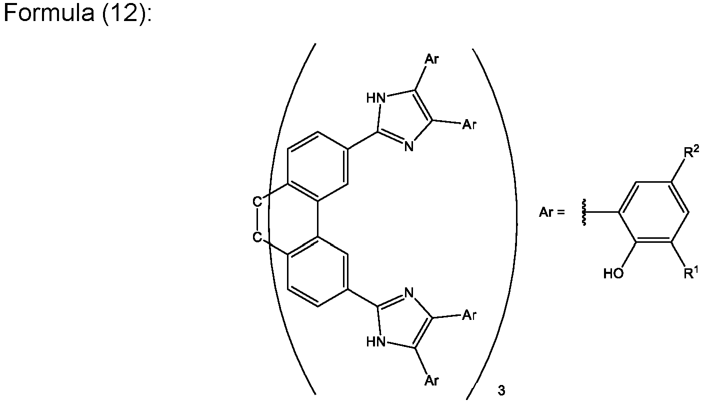 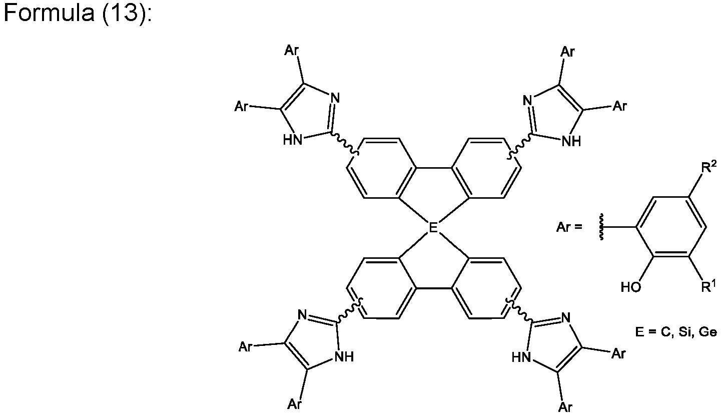 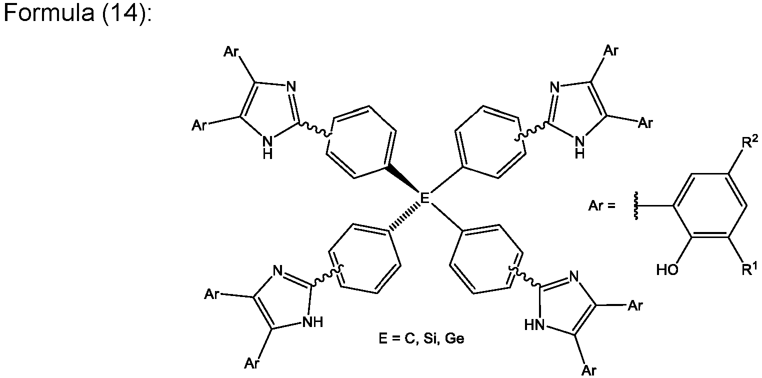 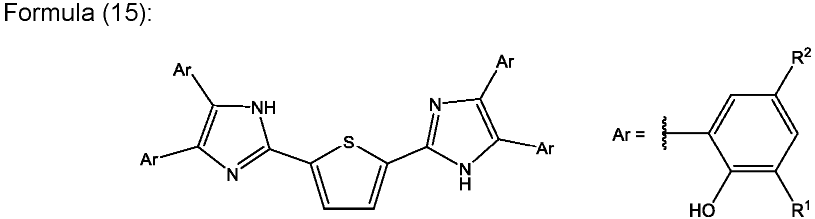 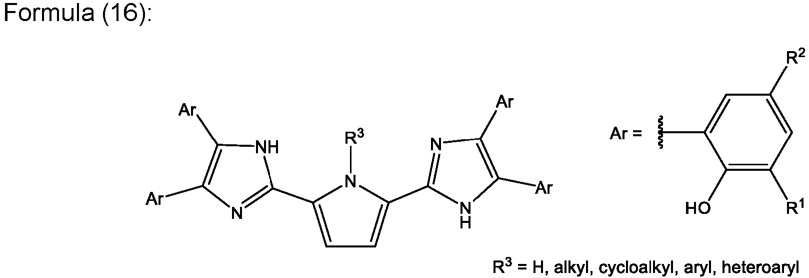 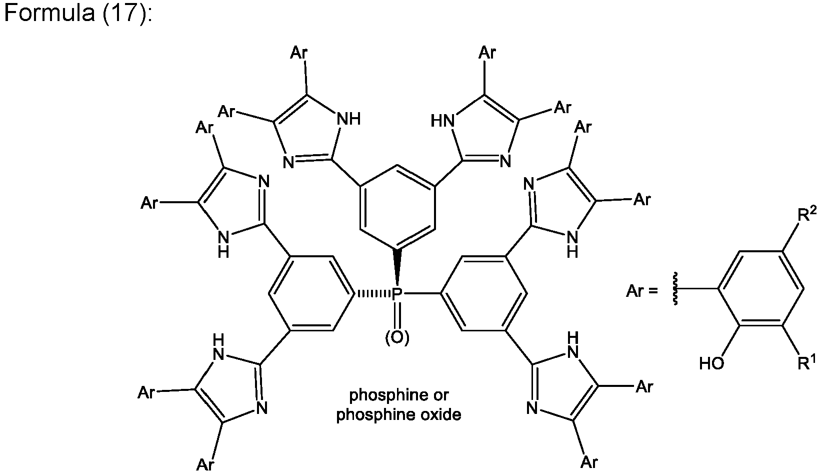 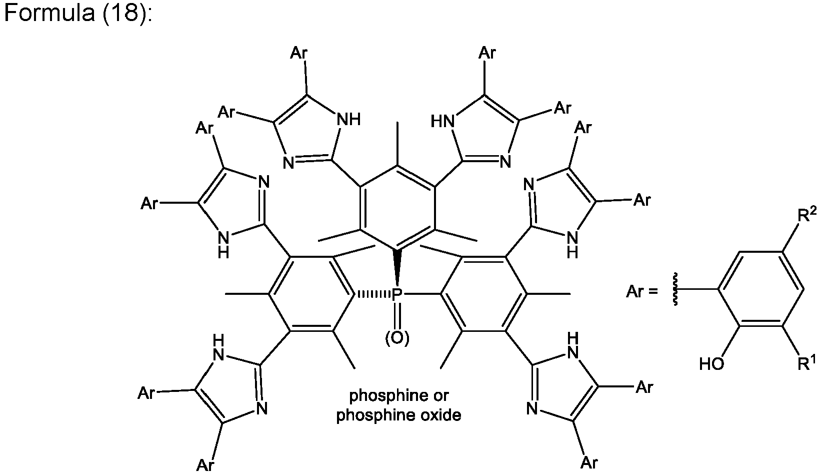 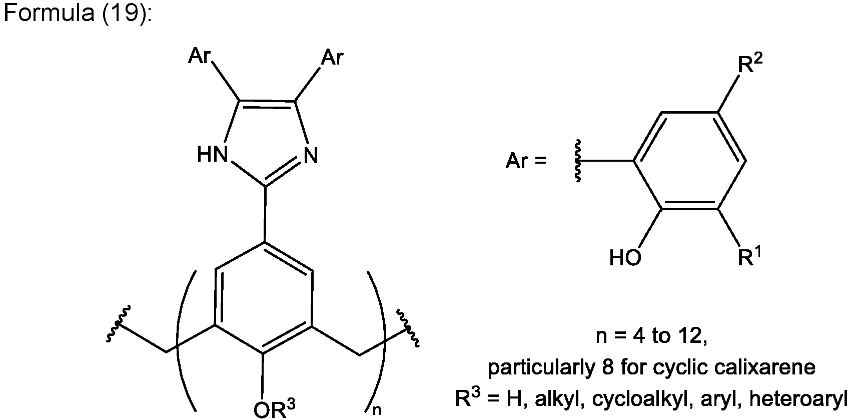 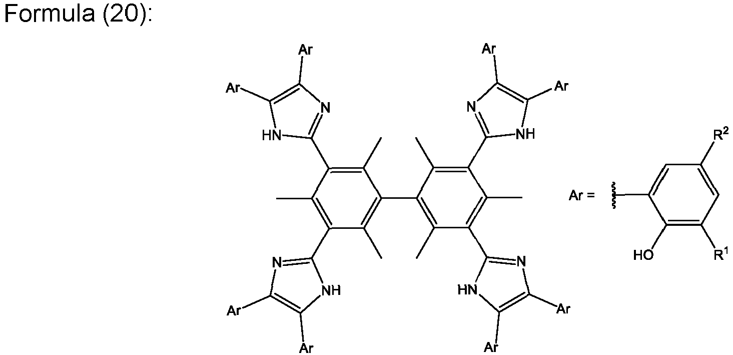 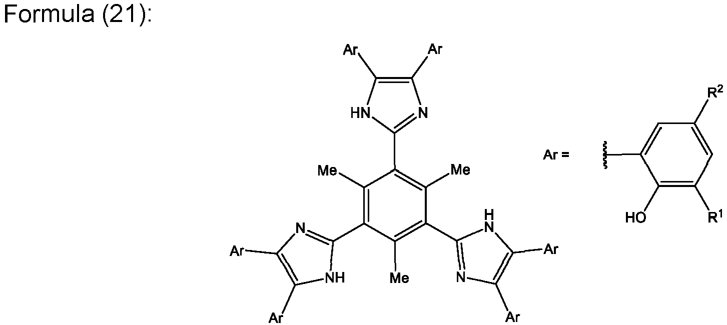 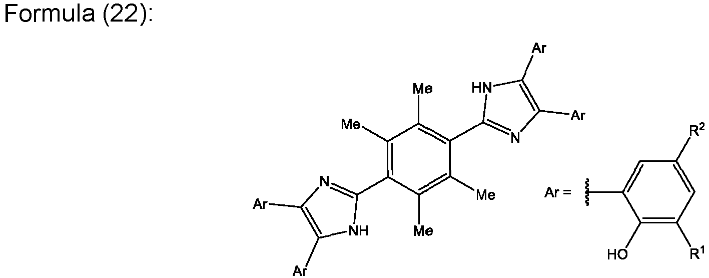 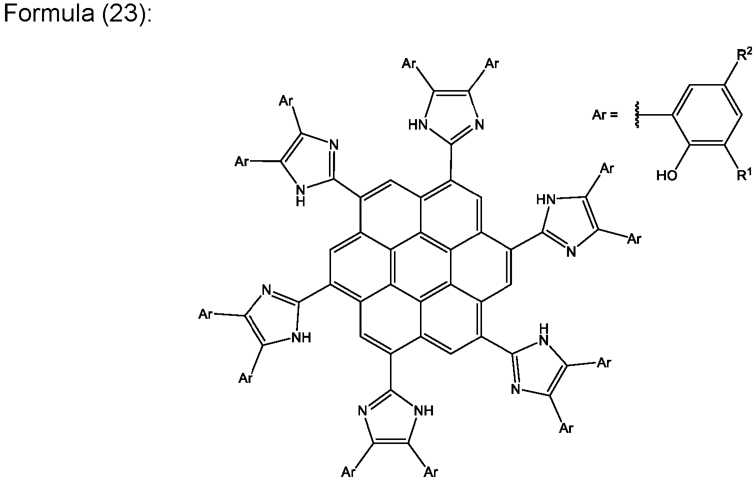
wherein E is a carbon atom or silicon atom or germanium atom and Ar is an *ortho-*hydroxyphenyl substituent with the 2-substituent R¹ and 4-substituent R², wherein R¹ is a branched or unbranched alkyl, aryl, alkylated/arylated silyl, heteroaryl group; and R² is H, branched or unbranched alkyl, aryl, alkylated/ arylated silyl, heteroaryl group; and R³ is hydrogen, alkyl, cycloalkyl, aryl or heteroaryl; and wherein a linker is a bivalent molecular organic fragment.

Further embodiments are characterized in the appended claims.

The present invention provides a catalytic composition employing a vanadium complex, an organic pre-ligand, and a metal base, suitable for various catalytic redox reactions such as the activation of molecular N₂. The combination of said components allows the production of NH₃ from N₂ and H₂ at mild conditions of pressures below 200 bar and temperatures of less than 300 °C reducing the energy costs of NH₃ production. Moreover, no expensive or aggressive reducing agents and proton donors are necessary.

In the following, embodiments of the present invention are described in detail. According to the present invention, a catalytic composition is provided containing at least a pre-ligand, a vanadium compound, and a base which are described in detail below.

### Vanadium compound

According to the present invention a vanadium-containing compound is used in the catalytic composition to provide an active species for catalytic activity.

Vanadium constitutes an optimal catalytic center for redox reactions, since vanadium can easily change its oxidation state. The most common oxidation states are +V and +IV, but +III and +II are also readily available despite being more reactive. Further, vanadium has a more electropositive nature compared to other metals rendering it suitable for catalytic activity and ligand binding. Even further, in low oxidation states of vanadium, i.e., +III, vanadium is capable of supplying electrons to ligands via π backbonding enabling weakening of the ligand's bonds which is especially important for activation of unreactive ligands such as molecular N₂.

However, when working with vanadium, caution has to be taken due to the vanadium's oxophilicity. Since vanadium easily changes its oxidation state, oxidation states below +V are prone to oxidation in air. Therefore, many of the preparation steps of the present invention are conducted in dry and inert atmosphere.

For the preparation of the catalytic composition, vanadium compounds having various oxidation states can be used. Typically, vanadium in the oxidation states +III, +IV, and +V is employed. However, in redox reactions of the catalytic composition, the oxidation state of the vanadium is not static. When choosing vanadium of the oxidation states +IV or +V, vanadyl compounds can be used containing an oxygen ligand. Due to the high oxophilicity of vanadium, the vanadium-oxygen bond is stable and the oxygen ligand is most probably maintained in the active catalyst formed from the catalytic composition.

Other than the metal, the ligands of the vanadium compound have a major impact on preparing the catalytic composition. In particular, the coordination number of vanadium is important for enabling easy binding of the vanadium to the pre-ligand described later. Low coordination numbers facilitate binding to the pre-ligand, while high coordination numbers hinder binding. Vanadium with few coordinated ligands is prone to binding nucleophilic solvent molecules to achieve a coordination number of 6 which is preferred by vanadium. Therefore, the ligands have to be chosen to achieve a high reactivity of the vanadium compound due to easy dissociation of part of the ligands.

**In** view of the above, polar solvents such as tetrahydrofuran (THF), dioxane, or morpholine can be used to coordinate vanadium compounds. However, it is important that said solvents are bound weakly and are easily dissociated from the vanadium as sacrificial ligands to enable binding to the pre-ligand.

Further, the vanadium compound can contain one or more vanadium centers. While mononuclear vanadium compounds are readily available, dinuclear vanadium compounds exhibit increased reactivity for binding a pre-ligand, since in dinuclear vanadium compounds the vanadium atoms are easily accessible, i.e., they are sterically less shielded by the ligands compared to mononuclear compounds.

Examples of the vanadium compound according to the present invention are vanadium compounds having the oxidation numbers +III, +IV, or +V.

As examples of vanadium compounds having the oxidation number +III, VCl₃(thf)₃, VCl(thf)(N(SiMe₃)₂)₂, V(N(SiMe₃)₂)₃, V(Mes)₃(thf), and compounds represented by the formulas (8-1) to (8-4) can be mentioned, preferably VCl₃(thf)₃ is used due to its ability to readily release chloride and tetrahydrofuran (THF) ligands for the binding to the pre-ligand.

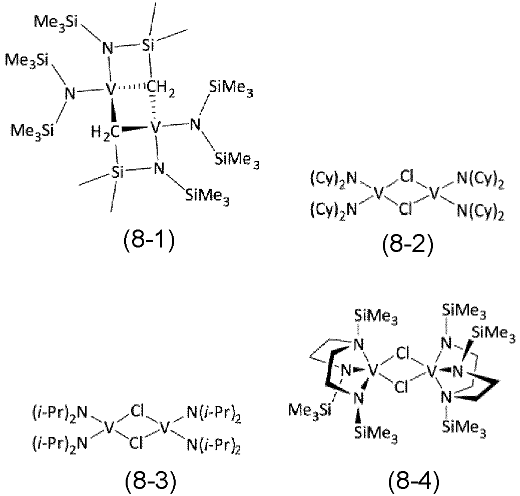

As examples of vanadium compounds having the oxidation number +IV, VO(acac)₂, VOCl₂(dioxane)₂, VOCl₂(N-morpholine)₂, and compounds represented by the formulas (8-5) and (8-6) can be mentioned, preferably VOCl₂(dioxane)₂ is used due to its ability to readily release chloride and dioxane ligands for the binding to the pre-ligand.

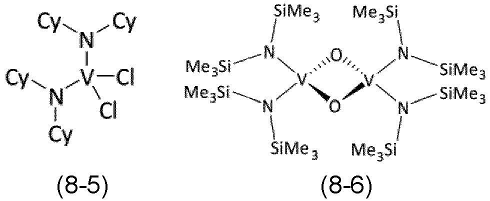

As an example of a vanadium compound having the oxidation number +V, VOCl₂(acac) can be mentioned.

From the viewpoint of availability and facilitated binding of the vanadium compound to the pre-ligand, the use of VCl₃(thf)₃ or VOCl₂(dioxane)₂ is most preferred.

Typical procedures to provide vanadium compounds according to the present invention include salt metathesis reactions of lithium salts or Grignard compounds containing organic residues or amine residues with vanadium halogenides of various oxidation states or even dissolving vanadium compounds with low coordination numbers (e.g., VCl₃) in boiling polar solvents such as THF or dioxane. An exemplary preparation of VOCl₂(dioxane)₂ is described in detail in the Examples below.

### Pre-ligand

According to the present invention, the catalytic composition comprises a pre-ligand. Said pre-ligand provides an environment for the active vanadium species in the catalytic reaction cycle. Therefore, there are steric and electronic requirements for the pre-ligand to be met to enable catalysis. Typically, vanadium has oxidation states between +II and +V during a catalytic redox cycle. Therefore, depending on the redox reaction to be catalyzed, it may be necessary to provide more than one vanadium center within the active catalyst to provide or accept a suitable number of electrons. The production of two NH₃ from N₂, for instance, needs 6 electrons provided by three H₂. However, in intermediates of the catalytic cycle said electrons might be provided by the vanadium atoms rendering it beneficial for the catalysis if the pre-ligand can bind more than one vanadium.

In view of the above, the function of the pre-ligand is to provide a structure for binding more than one vanadium atom and to enable electron transport between different bound vanadium atoms.

In order to achieve said functions, the pre-ligand is represented by the following formulas (1) to (23). 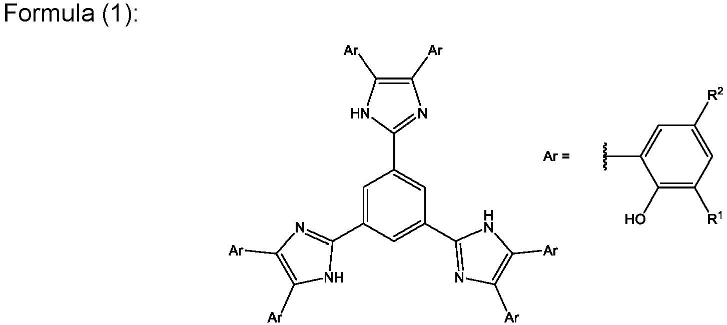 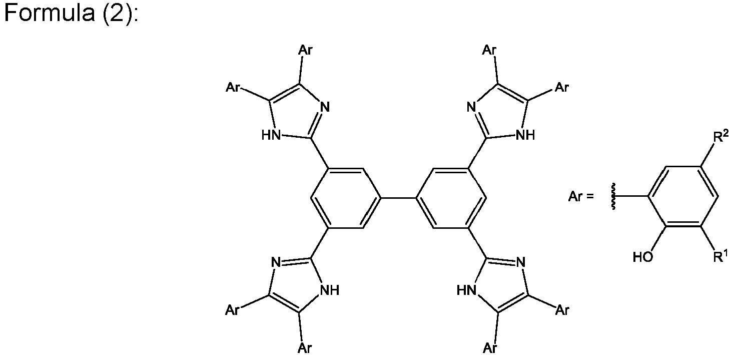 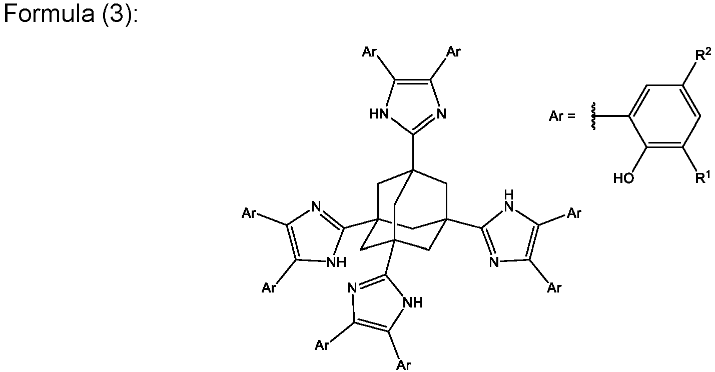 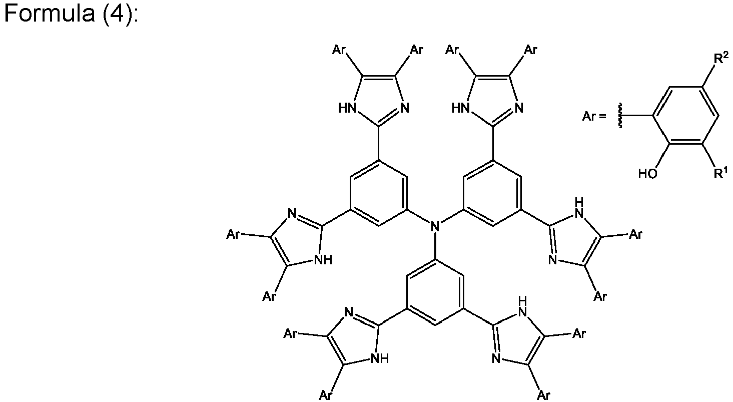 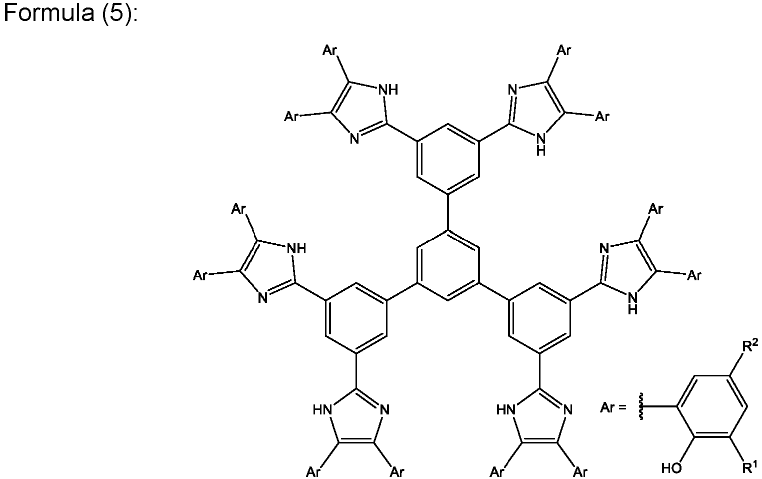 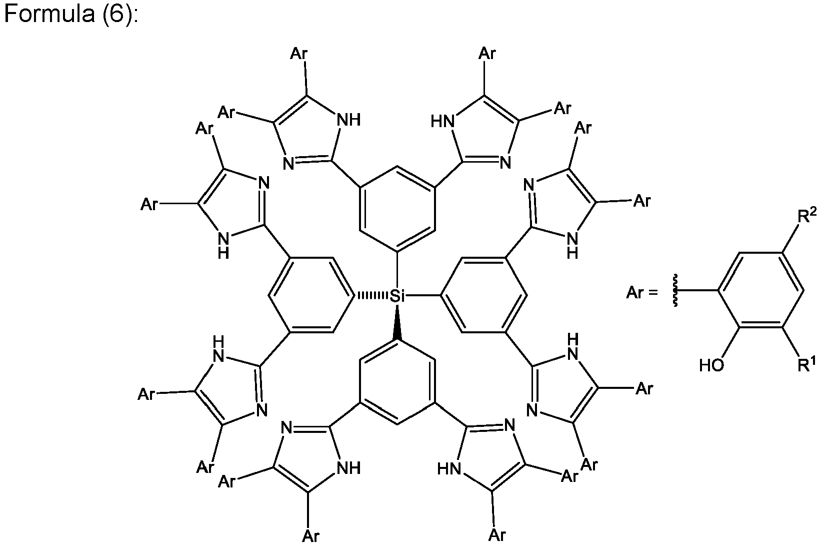 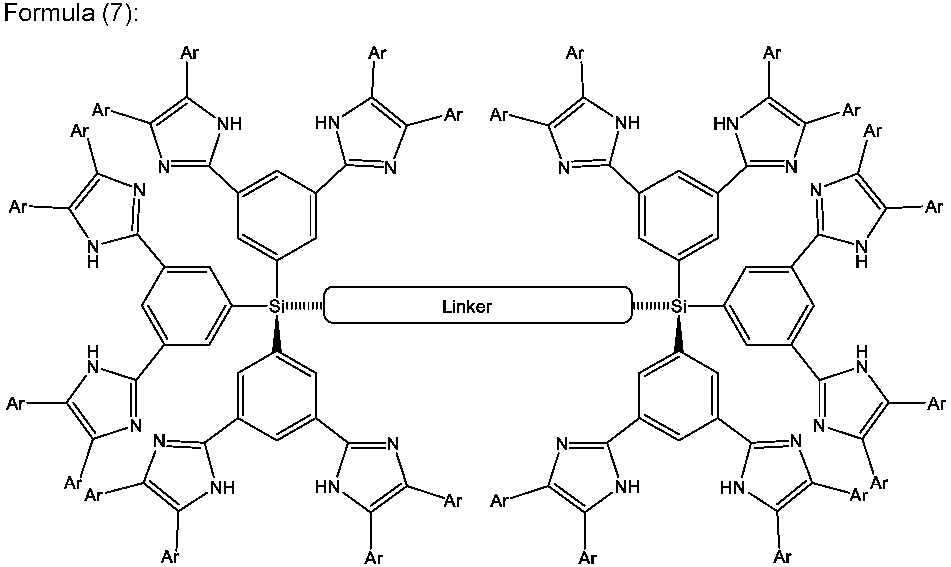 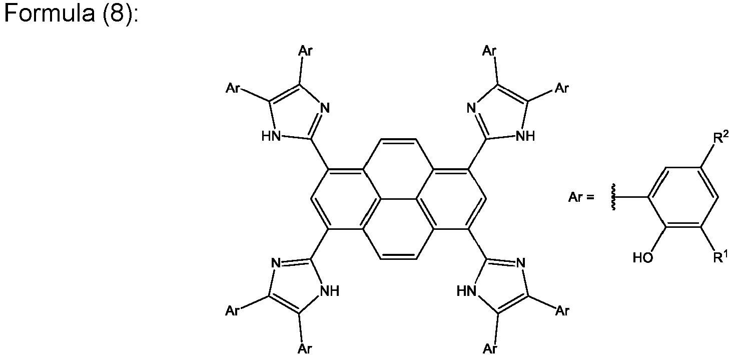 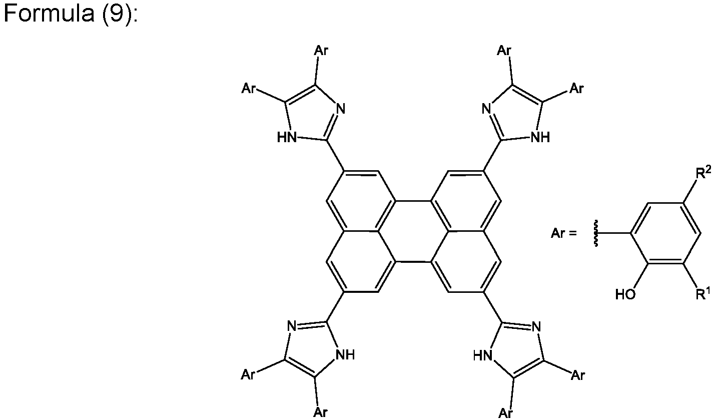 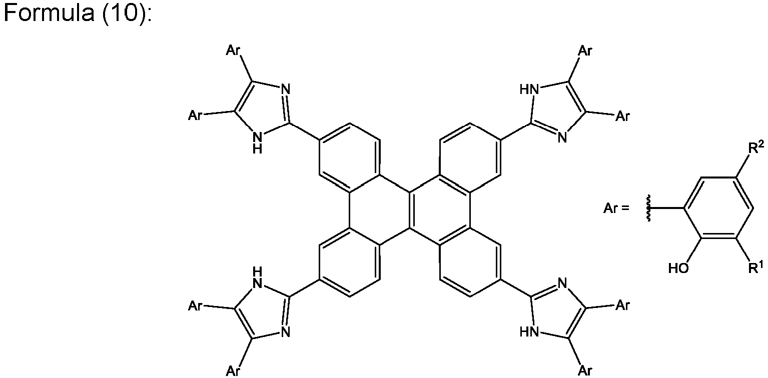 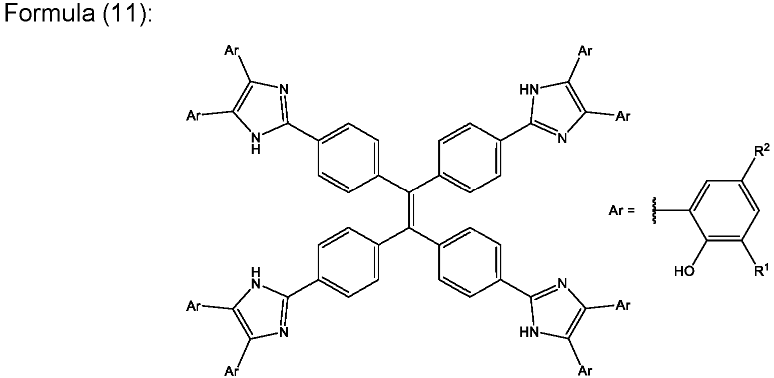 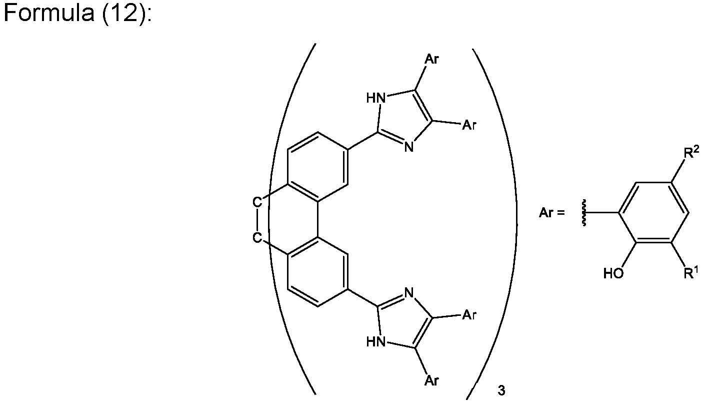 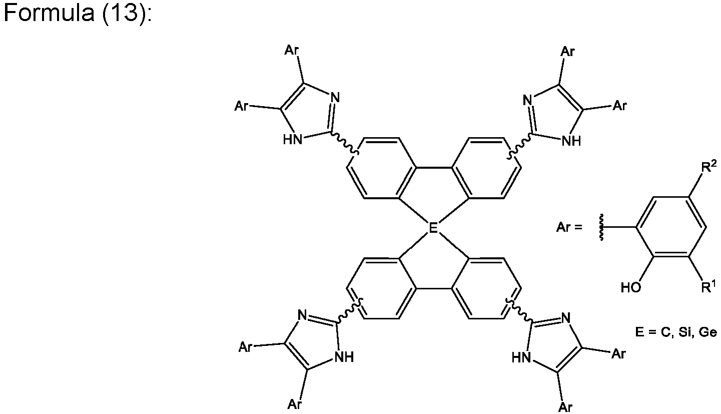 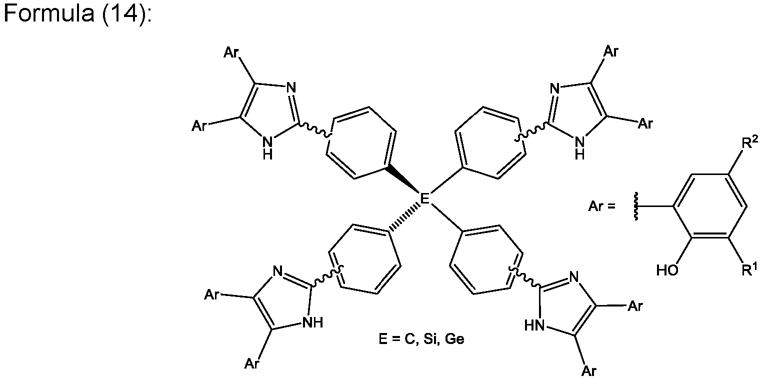 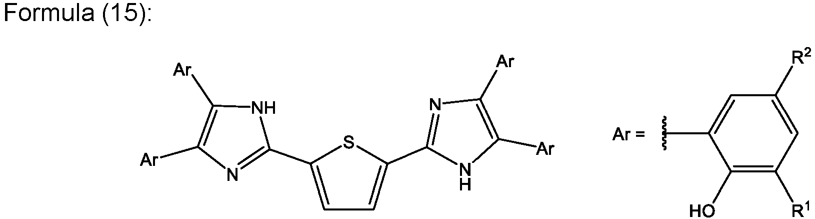 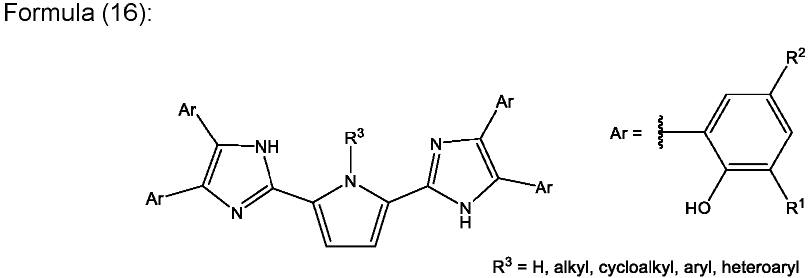 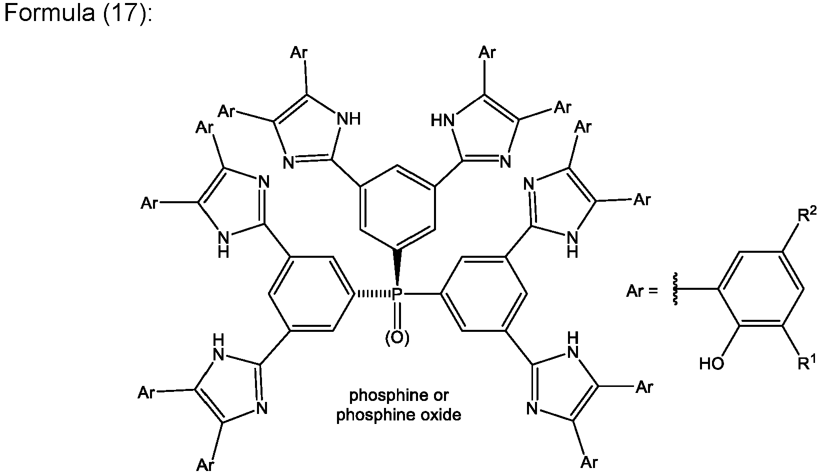 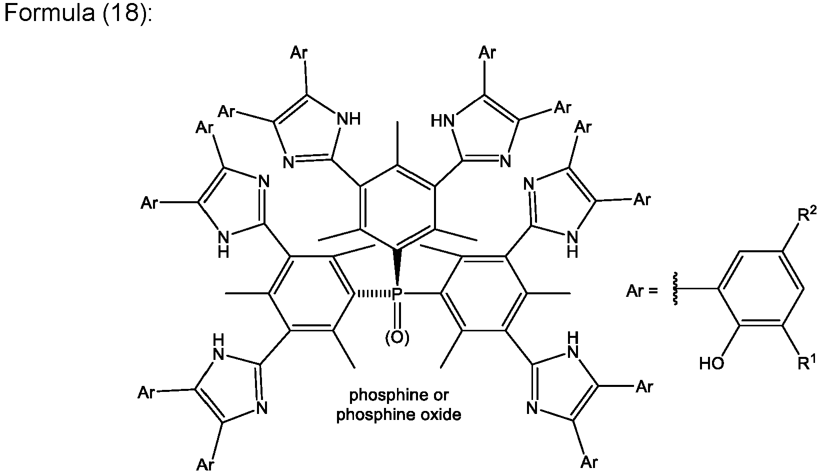 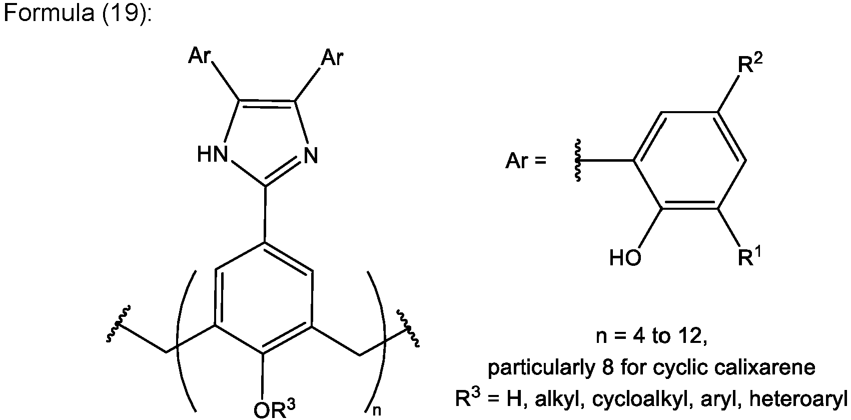 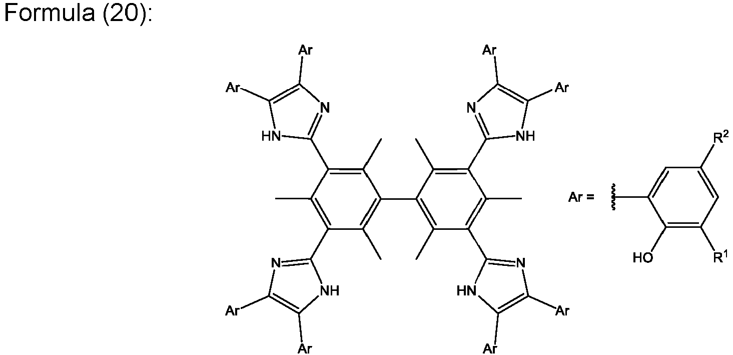 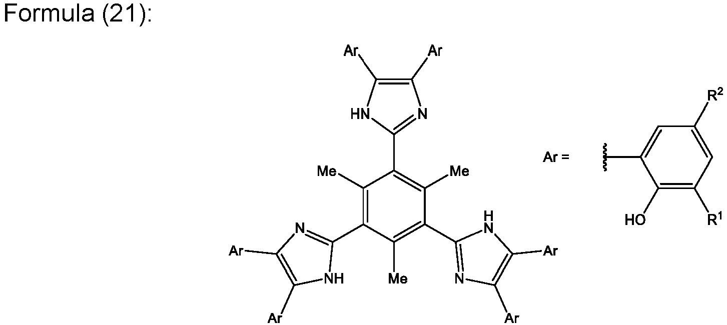 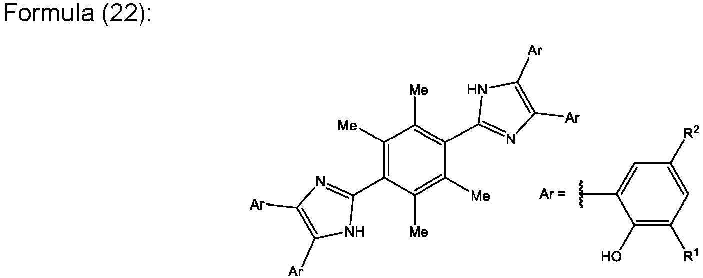 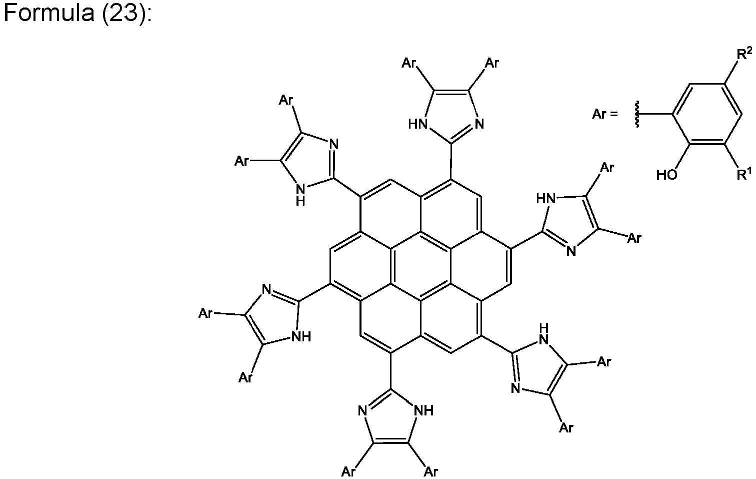 wherein E is a carbon atom or silicon atom or germanium atom and Ar is an *ortho-*hydroxyphenyl substituent with the 2-substituent R¹ and 4-substituent R², wherein R¹ is a branched or unbranched alkyl, aryl, alkylated/arylated silyl, heteroaryl group; and R² is H, branched or unbranched alkyl, aryl, alkylated/ arylated silyl, heteroaryl group; and R³ is hydrogen, alkyl, cycloalkyl, aryl or heteroaryl; and wherein a linker is a bivalent molecular organic fragment.

In formulas (1) to (23), the core of the pre-ligand is particularly composed of a benzene, biphenyl, adamantane, triphenylamine, 1,3,5-triphenylbenzene, tetraphenylsilane or linked bis(triphenylsilyl) structure. To the core there are bound 2 to 12 imidazole residues, which are called "arms" hereafter, further containing phenol substituents. The basic structure of formulas (1) to (23), thus, provides a rigid, conjugated structure which is capable of transporting electrons due to its aromatic character. Moreover, the described structure is exceptionally thermostable allowing applications at more than 200 °C for an elevated duration. The rigid structure of the pre-ligand provides the basis for stable coordination centers for binding vanadium which might be unstable in less rigid systems due to aggregation of different moieties.

Furthermore, as is evident from formulas (1) to (23), the pre-ligand contains several binding sites for metals. In particular, each imidazole arm contains four nucleophilic binding sites that are two nitrogen atoms in the imidazole ring and two oxygen atoms of the phenol substituents. Therefore, each bound vanadium atom is surrounded by a chelating ligand system of one oxygen and one nitrogen atom providing the basis for a stable catalyst. The strong binding of vanadium due to the chelating effect of two nucleophilic atoms increases the thermostability of the active catalyst. In contrast, pre-ligands which do not contain imidazole arms are not as thermostable and cannot be used for typical catalytic applications.

The phenol rings in formulas (1) to (23) may contain further residues R¹, R² and R³, respectively. These residues may have an impact on solubility and crystallization tendency which can influence the preparation of the pre-ligand. In detail, an increased crystallization tendency causes an increased yield of the pre-ligand and a simplified purification. Moreover, the residues can provide steric shielding of the vanadium binding sites which decreases aggregation of the active catalyst resulting in decreased deactivation. Preferably, the residues are branched alkyl groups due to their steric shielding effect and increased crystallization tendency. More preferably, said residues are *tert*-butyl or *tert*-pentyl groups which are excellent for increased crystallization tendency and shielding the vanadium binding sites while maintaining a suitable gas diffusion during catalysis.

Typical residues R¹ and R² are H, branched or unbranched alkyl groups. Examples for branched alkyl groups are *iso*-propyl, *iso*-butyl, *sec*-butyl, *tert*-butyl, and branched pentyl groups. Examples for unbranched alkyl groups include methyl, ethyl, *n*-propyl, *n*-butyl, and *n*-pentyl groups. Preferred are small and symmetric alkyl groups increasing the crystallization tendency of the pre-ligand such as *tert*-butyl and *tert-*pentyl groups. In view of solubility in nonpolar solvents during preparation, the length of the alkyl groups can be optimized to the used solvents. Further, sterically demanding branched alkyl groups, for instance *iso*-propyl and *tert*-butyl groups, are preferred due to their shielding effect of the pre-ligand.

The pre-ligand contains two or more imidazole arms each of which comprises two chelating vanadium binding sites, thus, the pre-ligand includes at least two areas capable of binding two vanadium atoms opposite to each other. These binding areas are called "binding pockets" in the following. Since the binding pockets are located between the imidazole arms, each pre-ligand contains more than one binding pocket, usually between 2 and 8 binding pockets. The size of the binding pockets depends mainly on the core of the pre-ligand and the position of the imidazole arms at the core. For instance, a pre-ligand represented by formula (1) having three imidazole arms contains three binding pockets. The four binding pockets in formula (2) are of different size depending on whether the imidazole arms are in *meta* position at the same phenyl group or across two phenyl groups in a biphenyl core. A pre-ligand represented by formula (2) contains four binding pockets of which two are small (i.e., the binding pockets surrounded by imidazole arms that are bound in *meta* position of the same phenyl ring of the core) and two are large (i.e., the binding pockets surrounded by imidazole arms that are bound to different phenyl rings of the core). In formula (3), there are four large pockets. In formulas (4) and (5), there are three small and three large binding pockets, respectively. In formula (6), there are four small and four large binding pockets. In formula (7), there are six small and up to six large binding pockets. Eight vanadium atoms are present in complexes of pre-ligand formulas (8), (9), (10), (11), (13), (14) and (20). Twelve vanadium atoms are present in complexes of pre-ligand formulas (12), (17), (18) and (23). Four vanadium atoms are present in complexes of pre-ligand formulas (15) and (16). 16 vanadium atoms are present in complexes of pre-ligand formula (19) with n = 8. At least one binding pocket in a catalytic complex has to avoid aggregation/deactivation of its two vanadium centers, respectively.

In view of the above, the position and number of imidazole arms of the pre-ligand constitutes an important parameter for adjusting the catalytic composition to the substrate of the catalysis.

According to the present invention, the pre-ligands represented by formula (1) with imidazole arms in *meta* position and the pre-ligands represented by formulas (2) to (23) are optimal for binding two vanadium atoms in each binding pocket and for enabling the vanadium atoms to bind a N₂ ligand bridging between two vanadium centers. The binding of two vanadium atoms to one N₂ ligand results in a more facile N₂ activation due to stronger binding of N₂ and more distinct weakening of the N₂ bond. Even more preferred are the more distant positions of the imidazole arms as represented by formula (2). The use of the described catalytic composition for other catalytic reactions than N₂ activation such as reactions of alkynes and olefines might render large binding pockets as in formulas (2) to (23) more suitable.

In the following, an exemplary synthesis route for preparing a pre-ligand is described. However, the present invention is not restricted to this specific synthesis route. Further, the exemplary synthesis route for a specific pre-ligand is described in more detail in the Examples.

Starting with a 2-halogen substituted anisole derivative, elemental lithium can be used to generate a C-nucleophilic lithium anisole derivative which then can react with gaseous CO. The dilithium endiolate product can be oxidized by chemically activated MnO₂. This reaction results in a dimeric anisole derivative which then is deprotected yielding a dimeric phenol derivative, called 1,2-diketone hereafter. The synthesis of this intermediate component is shown in the below Scheme 1. 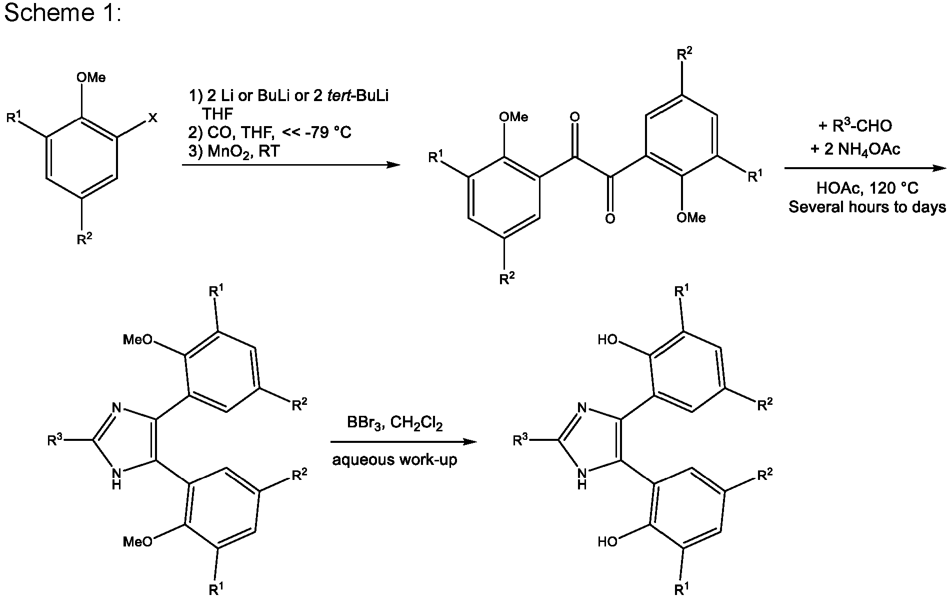 wherein R¹ can be selected from alkyl, aryl, silyl, and heteroaryl, R² can be selected from hydrogen, alkyl, aryl, silyl, and heteroaryl, R³ represent a moiety ("linker group") with at least two imidazole-derived substituents, and X represents a halogen substituent such as Cl, Br, or I, preferably Br.

Subsequently, the diketone is added to an aromatic aldehyde (constituting the core of the pre-ligand) and ammonium acetate in acetic acid. Thus, in a modified Debus-Radziszewski imidazole synthesis, the imidazole ring is formed yielding the final pre-ligand. The methyl protecting group can be removed by, for example, BBr₃ in CH₂Cl₂.

In the below chapter of the preparation of the pre-ligands, the synthetic protocols for three examples (compounds 4 and 5 and 7) are provided, thereby proving the proposed modular principle with different core modules and peripheral modules.

### Metal Base

According to the present invention, the catalytic composition comprises a base. Said base is included to deprotonate the pre-ligand, to bind additional halide ligands of the vanadium compound, and to activate bound N₂ molecules.

In particular, the base has to be able to deprotonate phenolic hydroxy groups and the acidic protons of the imidazole rings. Deprotonation of said groups provides the basis for strong coordination of the vanadium to the pre-ligand. Strong coordination is necessary for applications of the catalytic composition at elevated temperatures.

Preferably, the base contains a metal. In particular, said metal is selected from Li, Na, K, Mg, and Ca. The use of a base containing a metal enables the base to react with halide ligands of the vanadium compound. Due to a salt metathesis reaction of a metal-containing base with a vanadium compound having halide ligands, the ligands are removed under formation of a stable metal halide salt. Furthermore, incorporation of a metal supports the activation of N₂ which could serve as a substrate of the catalysis to be conducted. In particular, metal ions can polarize the N₂ bound to a catalytic complex and further destabilize the N-N bond resulting in increased activation of the substrate. In view of the above, preferred metals are Li, Na, and K, the most preferred being lithium.

Concerning the deprotonation efficiency, a strong base should be used for deprotonation of the pre-ligand. Preferably the base is a metal hydride or a metal salt of a branched or unbranched alkyl compound or of an aryl compound. More preferably, the base is potassium hydride, sodium hydride, or a lithium salt of a branched or unbranched alkyl compound. Even more preferably the base is either potassium hydride or *n*-butyl lithium. Most preferably, the base is *n*-butyl lithium.

According to the present invention, one base may be used alone or more than one base may be used in combination.

### Catalytic composition

In the following, the amounts of the components of the catalytic composition are described in terms of their quantity relative to one equivalent of the pre-ligand.

Usually, the vanadium compound is included depending on the number of imidazole arms of the pre-ligand. Each imidazole arm can bind two vanadium atoms. Thus, the catalytic composition contains an amount of vanadium compound of at least two equivalents for one equivalent of imidazole side-arms in the pre-ligand. This means for example that four equivalents of vanadium compound such as VOCl₂(dioxane)₂ are added to a pre-ligand having two imidazole arms, six equivalents of vanadium compound are added to a pre-ligand having three imidazole arms, and eight equivalents of vanadium compound are added to a pre-ligand having four imidazole arms. To improve the binding of the vanadium atoms to the pre-ligand, the vanadium compound may be added in excess.

The metal base is included in the catalytic composition depending on the number of acidic protons in the pre-ligand, or the number of vanadium equivalents, and the number of halide ligands of the vanadium compound, and the substrate of the catalysis to be conducted. Preferably, at least one equivalent of metal base should be added for each vanadium and each halide at the vanadium compound.

If, for example, a pre-ligand represented by formula (2) is used, 12 acidic protons have to be deprotonated requiring 12 equivalents of metal base such as BuLi. Overall, 8 vanadium and 16 chloride ligands of eight VOCl₂(dioxane)₂ require 24 BuLi, so another 12 BuLi have be added after combining the per-lithiated ligand and the vanadium(IV) compound.

A slight surplus of metal base leads to a higher content of the active catalytic compound, thereby defining the vanadium(IV) to vanadium(V) ratio and thus influencing the redox potential of the system. In other words, the amount of e.g. lithium is an adjusting screw for the activity of the catalytic system.

Moreover, further components may be incorporated into the catalytic composition.

Preferably, a carrier material may be used, since it is beneficial for increasing the reactive surface area of the catalytic composition. Increase of the surface area can result in more available catalytic centers and improved catalysis. As such, various solid carrier materials having a high surface area may be used. Preferably, celite, silica gel, graphite, soot, aluminium oxide, alumosilicates, a vanadium oxide or titanium dioxide may be used as carrier materials.

### Use of the catalytic composition

According to the present invention exemplary uses of the catalytic composition include the activation of molecular nitrogen or reactions of unsaturated hydrocarbons. Specific examples for uses of the catalytic composition are the synthesis of NH₃ from the elements N₂ and H₂, the reduction of N₂ to N(SiMe₃)₃, reactions of steam cracker gases such as hydrogenations or olefin metathesis reactions.

The pre-ligand can be adjusted according to the use of the catalytic composition. In particular, the size of the binding pockets for vanadium and the substrate of the catalysis may be optimized for each substrate.

### Method for producing NH₃ from the elements N₂ and H₂

According to the present invention, a method for producing NH₃ from the elements N₂ and H₂ can be conducted using the catalytic composition described above. The catalytically active vanadium complexes are generated *in situ* from the catalytic composition.

The method for producing NH₃ from N₂ and H₂ can be conducted under milder conditions than in classical NH₃ syntheses. In particular, the NH₃ production can be conducted at temperatures of less than 300 °C and at pressures of less than 200 bar. Working at these conditions ensures stability of the active catalyst generated from the catalytic composition according to the present invention. In view of costs, it is preferred to conduct the NH₃ synthesis at temperatures of less than 200 °C and pressures of less than 30 bar. Even further, the NH₃ synthesis has been successfully performed at standard pressure.

As reactant mixture any forming gas, i.e., any mixture of N₂ and H₂, can be used. It is preferred to use forming gas with a N₂:H₂ ratio of 1:3 representing the stoichiometric ratio of both reactants in the production of NH₃. The use of forming gas with a N₂:H₂ ratio of 95:5 is less hazardous for laboratory tests where the remaining hydrogen gas can be disposed of into the laboratory's exhaust hood.

In a further embodiment, the present invention relates to alkaline vanadium complexes or earth alkaline vanadium complexes with at least two 4,5-bis(ortho-hydroxyphenyl)imidazole-derived substituents at a central linker module that catalyze the N-N bond reduction by coordinated vanadium(IV) or the oxidation of two nitrides by coordinated vanadium(V), or both. The typical coordination numbers of vanadium atoms in these complexes are 4 and 5. 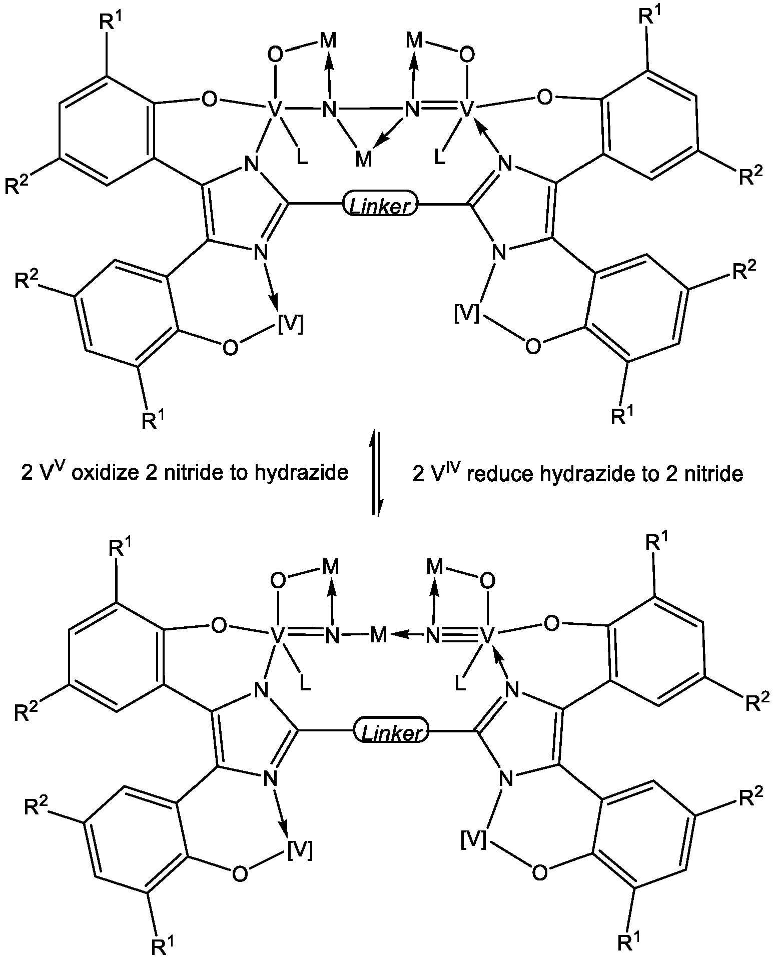
M = Li, Na, K, MgX, CaX; preferentially lithium
L = NH₂, NH₃ or free coordination site
[V] = Vanadium ion with further oxide, alkoxide, phenolate, nitride, imidate, amidate or ammine ligands
R¹ = alkyl, aryl, silyl, heteroaryl
R² = H, alkyl, aryl, silyl, heteroaryl
*Linker* = molecular fragment that comprises thermostable C-C, C-N, C-O, C-Si or C-P bonds,
and that as shown covalently connects two or more imidazole groups. General examples are alkylsilanes, arylsilanes, alkylarylsilanes, aryl ethers, arylamines, aryl phophines, aryl phosphine oxides, alkanes and cycloalkanes, aromatic and heteroaromatic systems, anellated aromatic and heteroaromatic systems. Specific examples are meta-phenylene, 3,3'-biphenylylene and 1,3-adamantandiyl.

### Examples

In the following, the present invention is described in detail based on examples. However, the present invention is not limited to the examples below.

### Materials and measurement methods

### Materials

All reagents and solvents were stored in a nitrogen filled glovebox prior to use. Anhydrous solvents were obtained from a MBraun MB SCS-800 solvent purification system containing appropriate drying agents. THF was distilled over sodium and degassed afterwards to then be stored over molecular sieves. Celite and graphite were dried at 350 °C under high vacuum for 1 day. Potassium hydride was washed with THF and hexane and dried under high vacuum. The mixture of the N₂/H₂ gas for a Schlenk line was constantly directed over a column of potassium hydride to remove oxygen and moisture impurities.

### Nuclear Magnetic Resonance (NMR) Spectroscopy

¹H-NMR spectra were recorded at room temperature and the following spectrometers were employed: Bruker Avance III 300 (300 MHz), Bruker Avance DRX 300 (300 MHz), Bruker Avance III 400 (400 MHz), Bruker Avance III 600 (600 MHz). Chemical shifts δ are indicated in ppm and were determined by reference to the residual ¹H-solvent peaks (acetone: 2.05 ppm; benzene: 7.16 ppm; chloroform: 7.26 ppm; deuterium oxide: 4.79 ppm; dichloromethane: 5.32 ppm; dimethyl sulfoxide (DMSO): 2.50 ppm; THF: 1.73 ppm, 3.58 ppm). Coupling constants J are given in Hz. The following abbreviations describe the observed multiplicities: s = singlet, d = doublet, t = triplet, q = quartet, quin = quintet, m = multiplet (composed abbreviations refer to multiple coupling patterns with the first letter indicating the greater coupling constant). ¹³C{¹H} NMR spectra were recorded at room temperature with the following spectrometers: Bruker Avance III 400 (100 MHz), Bruker Avance III 600 (150 MHz). The spectra were calibrated with respect to the solvent (acetone: 29.84 ppm, 206.26 ppm; benzene: 128.39 ppm; chloroform: 77.16 ppm; dichloromethane: 53.84 ppm; DMSO: 39.52 ppm). All observed signals were singlets. For processing, analysis, and interpretation of NMR spectra, the program TopSpin 3.5 by Bruker was used.

### Reactions

All reactions were carried out under an atmosphere of nitrogen or argon using glovebox and Schlenk line techniques.

### Evaluation of NH₃ production

The catalytic composition was set under a gentle stream of N₂/H₂ gas at standard pressure while it was heated up to 200 °C. After passing the catalytic composition, the gas stream was directed through a d₆-DMSO solution with a known amount of dimethyl sulfone as internal standard and methanesulfonic acid for the acidification of the produced NH₃, i.e., for trapping the NH₃. The so formed NH₄⁺ was detected by ¹H-NMR spectroscopy by its triplett signal between 6.9 and 7.4 ppm. Each production experiment was conducted at least two times. The results of testing the NH₃ production for each Example and Comparative Example are shown in Table 1. If NH₃ was produced, the respective Example is labelled "Y" (yes) and if no NH₄⁺ could be detected, the respective Example is labelled "N" (no).

### Preparation of pre-ligands

### Production Example 1

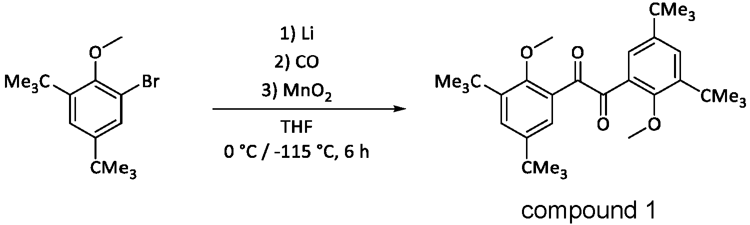

A flask was charged with 2-bromo-4,6-di-*tert*-butylanisole (3.50 g, 11.7 mmol, 1.00 eq.) in 20 ml THF. Then lithium granules (0.18 g, 25.7 mmol, 2.20 eq.) were added and the mixture was stirred at 0 °C for 1 h. The reaction mixture was transferred dropwise to a flask, which was flushed with carbon monoxide (CO) and cooled to - 115 °C. The mixture was stirred at -115 °C for 6 h under a CO atmosphere. Manganese dioxide (2.03 g, 23.3 mmol, 2.00 eq.) was added while changing to an argon atmosphere. After the mixture was stirred at room temperature overnight it was filtered over celite. Evaporation under reduced pressure gave the crude product, which was recrystallized from methanol. Compound 1 was isolated as a slightly yellow solid (3.45 g, 6.97 mmol, yield 60%).

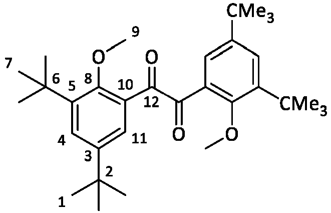

**C₃₂H₄₆O₄**

**M: 494.71 g/mol**

**¹H NMR** (300.51 MHz, CDCl₃, 300.0 K): δ = 7.59 (d, *⁴J*_{H-H} = 2.5 Hz, 2 H, H-4), 7.33 (d, *⁴J*_{H-H} = 2.5 Hz, 2 H, H-11), 3.58 (s, 3 H, H-9), 1.27 (s, 9 H, H-7), 1.05 (s, 9 H, H-1) ppm.

**¹³C{¹H} NMR** (75.56 MHz, CDCl₃, 300.0 K): δ = 195.9 (C-12), 158.5 (C-8), 146.0 (C-3), 142.0 (C-5), 130.4 (C-4), 128.9 (C-11), 126.2 (C-10), 65.4 (C-9), 34.9 (C-6), 34.6 (C-2), 31.4 (C-7), 30.6 (C-1) ppm.

### Production Example 2

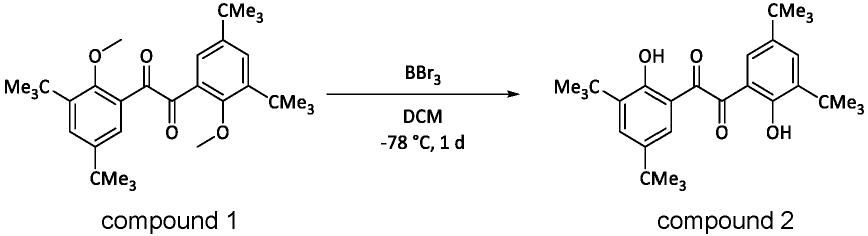

A flask was charged with compound 1 (3.40 g, 6.87 mmol, 1.00 eq.) in 30 ml dichloromethane (DCM). The mixture was cooled to -78 °C and boron tribromide (9.32 g, 37.2 mmol, 3.00 eq.) was added dropwise. Stirring was continued at room temperature for 1 d. The final mixture was poured onto ice, washed with water and dried over magnesium sulfate. Tartaric acid (5.15 g, 34.3 mmol, 5.00 eq.) was added to a mixture of the crude product in methanol and the solution was refluxed for 2 h. The reaction mixture was evaporated, redissolved in DCM, washed with water and dried over magnesium sulfate. The crude compound 2 was purified by silica gel column chromatography (PE) to give a yellow solid (2.50 g, 5.36 mmol, yield 82%).

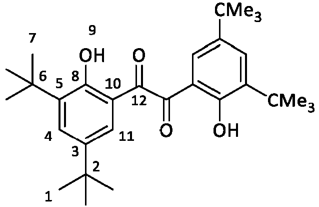

**^{C}₃₀^{H}₄₂⁰⁴**

M: 466.66 g/mol

**¹H NMR** (300.51 MHz, CDCl₃, 300.0 K): δ = 12.0 (s, 2 H, H-9), 7.65 (d, *⁴J*_{H-H} = 2.3 Hz, 2 H, H-4), 7.27 (d, *⁴J*_{H-H} = 2.3 Hz, 2 H, H-11), 1.47 (s, 18 H, H-7), 1.22 (s, 18 H, H-1) ppm.

**¹³C{¹H} NMR** (75.56 MHz, CDCl₃, 300.0 K): δ = 197.7 (C-12), 161.4 (C-8), 141.3 (C-3), 138.5 (C-5), 133.4 (C-4), 126.0 (C-11), 115.9 (C-10), 35.2 (C-6), 34.2 (C-2), 31.2 (C-7), 29.4 (C-1) ppm.

### Production Example 3

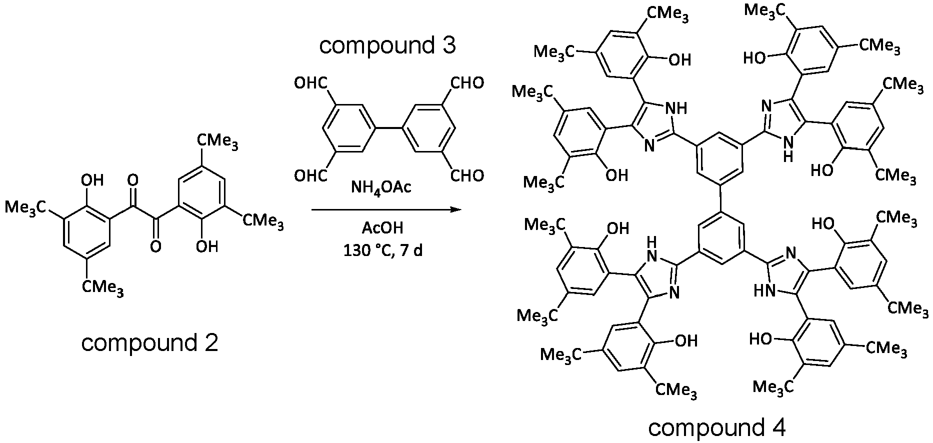

A flask was charged with compound 2 (7.90 g, 16.9 mmol, 4.10 eq.), compound 3 (1.10 g, 4.13 mmol, 1.00 eq.) and ammonium acetate (7.96 g, 0.10 mol, 25.0 eq.) in acetic acid (140 ml). The resulting mixture was stirred at 130 °C for 7 d. After cooling to room temperature, the mixture was filtered and the residue was washed with acetic acid. The crude compound 4 was recrystallized from toluene yielding a colorless solid (6.20 g, 3.02 mmol, yield 73%).

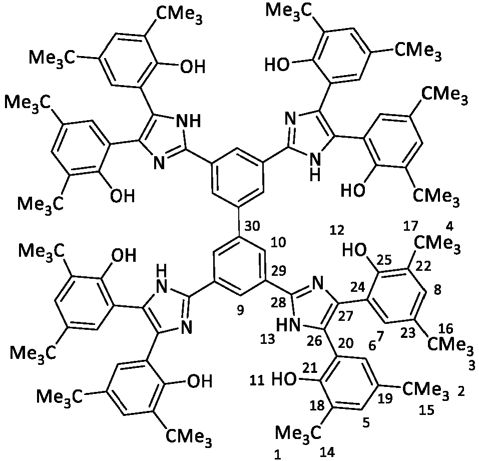

**^{C}₁₃₆^{H}_{17S}NsOs**

**M: 2052.96 g/mol**

**¹H NMR** (600.24 MHz, CD₂Cl₂, 300.0 K): δ = 12.55 (s, 4 H, H-13), 9.86 (s, 4 H, H-12), 8.61 (s, 2 H, H-9), 8.19 (d, *⁴J*_{H-H} = 1.5 Hz, 4 H, H-10), 7.50 (d, *⁴J*_{H-H} = 2.5 Hz, 4 H, H-6/7), 7.30 (d, *⁴J*_{H-H} = 2.5 Hz, 4 H, H-6/7), 7.17 (d, *⁴J*_{H-H} = 2.5 Hz, 4 H, H-5/8), 7.10 (d, *⁴J*_{H-H} = 2.5 Hz, 4 H, H-5/8), 5.30 (s, 4 H, H-11), 1.44 (s, 36 H, H-1/4), 1.42 (s, 36 H, H-1/4), 1.32 (s, 36 H, H-2/3), 0.97 (s, 36 H, H-2/3) ppm.

**¹³C{¹H} NMR** (150.93 MHz, CD₂Cl₂, 300.0 K): δ = 153.2 (C-28), 150.4 (C-29), 143.3 (C-21/25), 142.2 (C-21/25), 140.3 (C-19/23), 140.0 (C-19/23), 138.0 (C-18/22), 136.4 (C-18/22), 130.4 (C-26&27), 129.0 (C-toluene), 128.2 (C-toluene), 126.1 (C-5/8), 125.4 (C-5/8), 125.2 (C-9), 124.6 (C-toluene), 123.6 (C-6/7), 121.8 (C-10), 121.7 (C-30), 120.5 (C-6/7), 117.4 (C-20/24), 115.5 (C-20/24), 35.1 (C-14&17), 34.6 (C-15/16), 33.9 (C-15/16), 32.2 (C-2/3), 31.1 (C-2/3), 29.5 (C-1&4) ppm.

### 1,3,5-Tris[4,5-bis(3, 5-di-tert-butyl-2-hydroxyphenyl)-1H-imidazol-2-yl]benzene

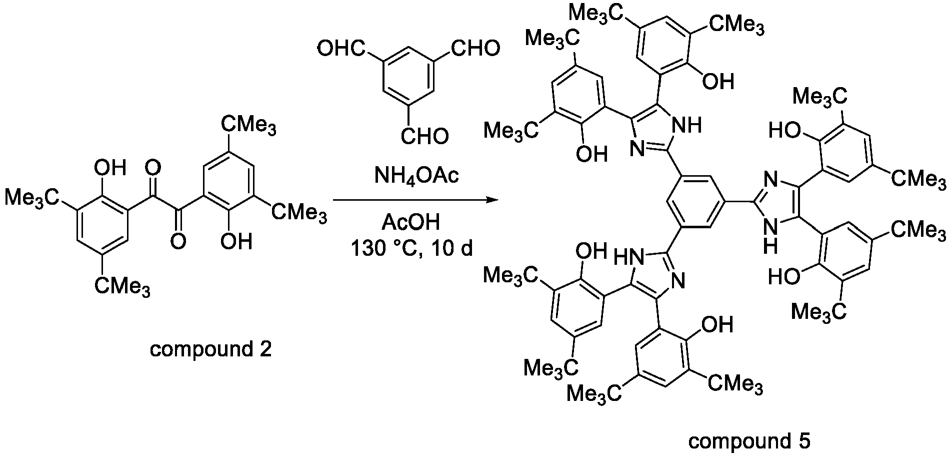

A flask was charged with 1,2-bis(3,5-di-*tert*-butyl-2-hydroxyphenyl)ethandione compound 2 (1.81 g, 3.89 mmol, 3.10 eq), benzene-1,3,5-tricarboxaldehyde (0.18 g, 1.11 mmol, 1.00 eq) and ammonium acetate (1.71 g, 22.20 mmol, 20.00 eq) in acetic acid (36 ml) under an argon atmosphere. The resulting mixture was stirred at 130 °C for 10 d. After cooling to room temperature the mixture was filtered and the residue (compound 5 - 3 AcOH) was washed with acetic acid and diethyl ether (1-3 ml) to give the colorless solid compound 5 (1.63 g, 0.95 mmol, 85%).

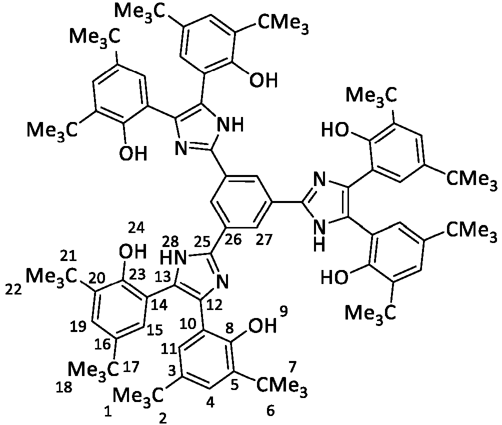

**^{C}₉₉^{H}I32^{N}6⁰⁶**

**M: 1501.0208**

**¹H NMR** (600.24 MHz, CDCl₃, 300.0 K): δ = 13.01 (s, 3 H, H-28), 10.53 (s, 3 H, H-9), 8.56 (s, 3 H, H-27), 7.58 (s, 3 H, H-11/15), 7.38 (s, 3 H, H-11/15), 7.27 (s, 3 H, H-4/19 ), 7.21 (s, 3 H, H- 4/19), 5.32 (s, 3 H, H-24), 1.54 (s, 27 H, H-22/7), 1.53 (s, 27 H, H- 22/7), 1.42 (s, 27 H, H-1/18), 1.07 (s, 27 H, H-1/18) ppm.

**¹³C{¹H} NMR** (150.93 MHz, CDCl₃, 300.0 K): δ = 153.2 (C-25), 150.4 (C-26), 143.4 (C-8/23), 142.8 (C-8/23), 140.6 (C-3/16), 139.8 (C-3/16), 136.6 (C-5/20), 136.5 (C-5/20), 130.4 (C-12/13), 126.2 (C-12/13), 125.3 (C-4/19), 123.9 (C-4/19), 122.3 (C-11/15), 121.8 (C-27), 120.4 (C-11/15), 117.4 (C-10/14), 115.5 (C-10/14), 35.3 (C--6-21), 34.6 (C-2/17), 34.0 (C-2/17), 31.7 (C-1/18), 31.3 (C-1/18), 29.9 (C-7-22) ppm.

### Elemental Analysis (No. 41747)

| | | |
|---|---|---|
| Calculated for [M+AcOH]: | C: | 77.65, H: 8.78, N: 5.38 |
| Found: | C: | 77.83, H: 8.83, N: 5.54 |

### HR-MS (ESI⁺, DCM/MeOH) m/z (%):

| | |
|---|---|
| Calculated for [M-H]: | 1503.0315 |
| Found: | 1503.0333 |

**IR** (ATR) v = 3522 (m), 2954 (s), 2869 (m), 1607 (w), 1439 (s), 1361 (s), 1198 (m), 835 (m) cm⁻¹.

| | |
|---|---|
| **Melting Point** | 253 °C |

**¹H NMR** of compound 5 · 3 AcOH (600.24 MHz, CDCl₃, 300.0 K): δ = 8.75 (s, 3 H, H-14), 7.37 (d, *³J*_{H-H} = 2.3 Hz, 6 H, H-10), 7.27 (d, *³J*_{H-H} = 2.3 Hz, 6 H, H-4), 1.89 (s, 12 H, H-15), 1.48 (s, 54 H, H-7), 1.21 (s, 54 H, H-1) ppm.

**¹³C{¹H} NMR** of compound 5 . 3 AcOH (150.93 MHz, CDCl₃, 300.0 K): δ = 176.9 (C-16), 151.4 (C-12), 143.6 (C-8), 142.1 (C-3), 136.5 (C-5), 131.2 (C-13), 130.4 (C-9), 129.9 (C-11), 124.8 (C-10), 122.2 (C-4), 117.0 (C-14), 35.3 (C-6), 34.3 (C-2), 31.5 (C-7), 29.9 (C-1), 20.4 (C-15) ppm.

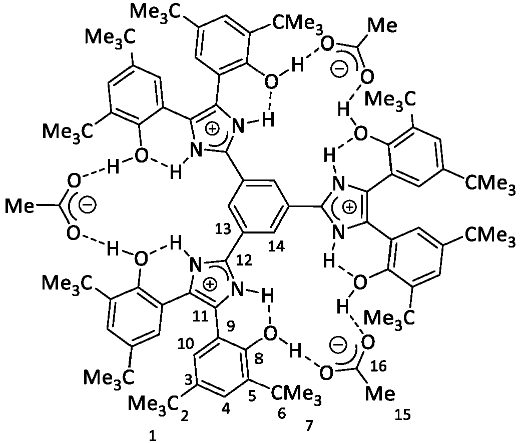

**^{C}_{10S}^{H}_{1S1} ^{N}₆₀₁₂**

**M: 1689.3930**

### 1,3,5-Tris[4,5-bis(3,5-di-tert-amyl-2-hydroxyphenyl)-1H-imidazol-2- yl]benzene

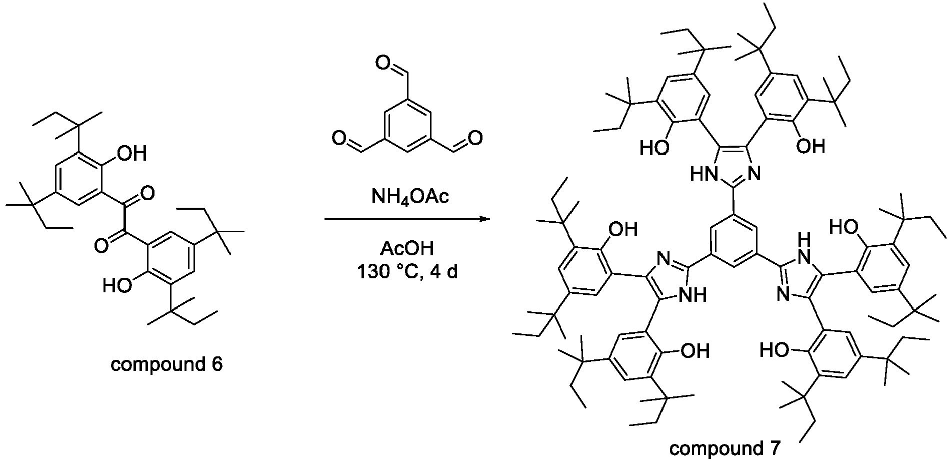

The diketone compound 6 (1.00 g, 1.91 mmol, 3.5 eq.) was solved in acetic acid (20 ml) under argon atmosphere. Ammonium acetate (1.05 g, 13.7 mmol, 25 eq.) and benzene-1,3,5-tricarboxaldehyde (88.6 mg, 0.55 mmol, 1 eq.) were added. The reaction mixture was heated to 130 °C and stirred for four days. After cooling to room temperature the reaction mixture was poured onto water and extracted with diethyl ether (3x 30 ml). The organic layer was neutralized two times with saturated sodium hydrogen carbonate solution (20 ml) and washed three times with water (20 ml). After drying over magnesium sulfate and recrystallization from hot methanol the trisimida-zole compound 7 was obtained as pale yellow solid (716 mg, 0.429 mmol, 78%).

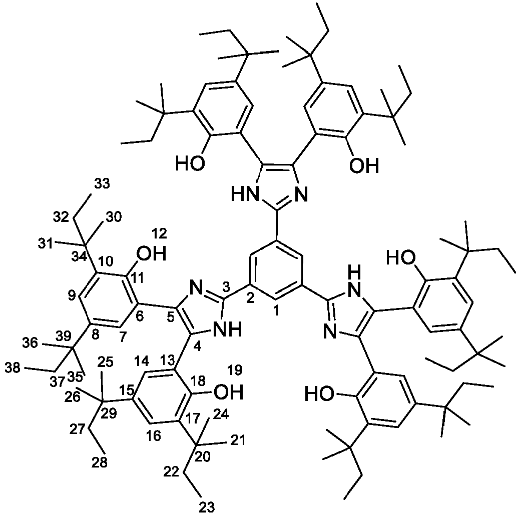

**^{C}₁₁₁ ^{H}_{15S}^{N}₆⁰₆**

**M= 1669,2086**

**¹H NMR** (300.51 MHz, CDCl₃, 300.0 K): δ = 13.13 (s, 3H, H-12), 10.85 (s, 3H, NH), 8.55 (s, 3H, H-1), 7.38 (s, 3H, H-7), 7.24 (s, 3H, H-9), 7.11 (s, 3H, H-16), 7.08 (s, 3H, H-14), 5.24 (s, 3H, H-19), 1.96 (q, *³J*_{H-H} = 5.7 Hz, 12H, H-22+32), 1.67 (q, *³J*_{H-H} = 5.4 Hz, 6H, H-27), 1.41 (s, 36H, H-25+26+35+36), 1.36 (q, *³J*_{H-H} = 5.4 Hz, 6H, H-37), 1.31 (s, 18H, H-24+31), 0.95 (s, 18H, H-21+30), 0.75 (t, *³J*_{H-H} = 5.4 Hz, 18H, 23+33), 0.69 (t, *³J*_{H-H} = 5.7 Hz, 9H, H-38), 0.54 (t, *³J*_{H-H} = 5.4 Hz, 9H, H-28) ppm.

**¹³C{¹H} NMR** (125.76 MHz, CDCl₃, 300.0 K): δ = 153.1 (C-11), 150.4 (C-18), 143.0 (C-17), 141.3 (C-3), 140.0 (C-15), 139.9 (C-5), 134.8 (C-10), 134.7 (C-8), 130.3 (C-2), 128.1 (C-7), 126.1 (C-9), 125.9 (C-14), 122.2 (C-4), 121.8 (C-1), 121.2 (C-16), 117.6 (C-13), 115.5 (C-6), 38.9 (C-20), 38.9 (C-43), 37.8 (C-27), 37.2 (C-39), 37.1 (C-37), 36.9 (C-27), 33.4 (C-22), 33.2 (C-32), 28.9 (C-25+35), 28.2 (21+30), 27.9 (26+36), 27.8 (24+31), 9.7 (C-23+33), 9.4 (C-38), 9.2 (C-28) ppm.

**IR** (ATR) v = 3520 (w), 3238 (w), 2962 (s), 2875 (m), 1704 (w), 1609 (w), 1572 (w), 1459 (s), 1443 (s), 1376 (m), 1361 (m), 1329 (w), 1297 (w), 1278 (w), 1248 (m), 1197 (m), 1168 (w), 1106 (w), 1060 (w), 1008 (w), 880 (w), 854 (m), 783 (w), 701(m), 665 (w), 648 (w), 617 (w) cm⁻¹.

### Preparation of VOCl₂(dioxane)₂

### Production Example 4

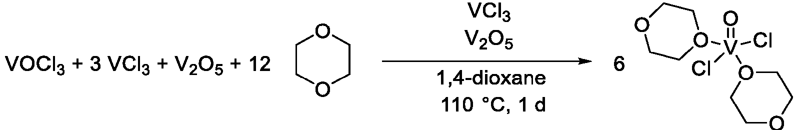

A flask was charged with vanadium trichloride (VCl₃) (1.82 g, 11.5mmol, 3.00 eq.) in 75 ml anhydrous dioxane. The suspension was heated to 90 °C and stirred for 1 h. Afterwards divanadium pentaoxide (V₂O₅) (0.70 g, 3.85 mmol, 1.00 eq.) was added and the mixture was stirred again at 90 °C for 1 h. Then vanadyl chloride (VOCl₃) (0.76 g, 0.36 ml, 3.85 mmol, 1.00 eq.) was added quickly and the resulting dark red mixture was refluxed overnight. The resulting blue suspension was filtered and washed with dioxane giving a dark blue solution. After standing overnight a blue precipitate was formed. The suspension was filtered again and the crude product was recrystallized from dioxane twice yielding VOCl₂(dioxane)₂ (5.45 g, 17.3 mmol, 75%) as a blue solid.

### Preparation of the catalytic composition

### Example 1

A flask was charged with compound 4 (0.20 g, 97.42 µmol, 1.00 eq.) in 20 ml anhydrous THF. The solution was cooled to -78 °C and n-BuLi (0.76 ml, 1.60 M, 1.22 mmol, 12.5 eq.) as a base was added dropwise, leading to a strong yellow color and stirring was continued for 1 h. Afterwards the vanadium compound VOCl₂(dioxane)₂ (0.25 mg, 0.79 mmol, 8.20 eq.) in 20 ml anhydrous THF was added dropwise at -116 °C, causing a rapid color change to dark black. The resulting mixture was stirred at room temperature for 1 d. To generate an excess of lithium, the solution was cooled to -116 °C and n-BuLi (0.36 ml, 1.6 M, 0.58 mmol, 6.00 eq.) was added dropwise.

### Example 2

A catalytic composition was obtained in the same manner as in Example 1 except that the forming gas composition in the subsequent NH₃ production experiment was varied.

### Example 3

A catalytic composition was obtained in the same manner as in Example 1 except that in a last step celite was added as a carrier material for the catalytic composition.

### Example 4

A catalytic composition was obtained in the same manner as in Example 1 except that in a last step graphite was added as a carrier material for the catalytic composition.

### Examples 5 to 8

Catalytic compositions were obtained in the same manner as in Examples 1 to 4, respectively, except that an increased amount of the base n-BuLi (0.54 ml, 1.6 M, 0.87 mmol, 9.00 eq.) was added to generate an excess of lithium in the last step of preparing the catalytic compositions.

### Comparative Example 1

A composition was obtained in the same manner as in Example 1 except that the pre-ligand was omitted.

### Comparative Example 2

A composition was obtained in the same manner as in Example 1 except that the vanadium compound was omitted.

### Comparative Example 3

A composition was obtained in the same manner as in Example 1 except that the gas composition in the subsequent NH₃ production experiment did not contain H₂.

### Production of NH₃

The resulting suspensions of Examples 1 to 8 and Comparative Examples 1 to 3 were then dried in high vacuum and the residue was brought to the glovebox again in order to be transferred into a U-shaped glassware. The glassware was connected to a Schlenk line and set under a gentle stream of N₂/H₂ gas at standard pressure while it was heated up to 200 °C. After passing the catalytic composition, the gas stream was directed through a d₆-DMSO solution with a known amount of dimethyl sulfone as internal standard and methanesulfonic acid for the acidification of the produced ammonia, i.e., for trapping the ammonia. For each Example and Comparative Example at least 2 experiments were conducted to test for reproducibility of the NH₃ production.

**Table 1**

| Example | pre-ligand | V compound | base eq.¹ | Carrier | N₂:H₂ | NH₃ production |
|---|---|---|---|---|---|---|
| Ex. 1 | compound 4 | VOCI₂(dioxane)₂ | 18.5 | - | 1:3 | Y |
| Ex. 2 | compound 4 | VOCI₂(dioxane)₂ | 18.5 | - | 95:5 | Y |
| Ex. 3 | compound 4 | VOCl₂(dioxane)₂ | 18.5 | celite | 1:3 | Y |
| Ex. 4 | compound 4 | VOCl₂(dioxane)₂ | 18.5 | graphite | 1:3 | Y |
| Ex. 5 | compound 4 | VOCl₂(dioxane)₂ | 21.5 | - | 1:3 | Y |
| Ex. 6 | compound 4 | VOCI₂(dioxane)₂ | 21.5 | - | 95:5 | Y |
| Ex. 7 | compound 4 | VOCl₂(dioxane)₂ | 21.5 | celite | 1:3 | Y |
| Ex. 8 | compound 4 | VOCI₂(dioxane)₂ | 21.5 | graphite | 1:3 | Y |
| Comparative Ex. 1 | - | VOCI₂(dioxane)₂ | 18.5 | - | 1:3 | N |
| Comparative Ex. 2 | compound 4 | - | 18.5 | - | 1:3 | N |
| Comparative Ex. 3 | compound 4 | VOCI₂(dioxane)₂ | 18.5 | - | 1:0 | N |

| | | | | | | |
|---|---|---|---|---|---|---|
| ¹ equivalents of base relative to 1.00 equivalent of pre-ligand | | | | | | |

As can be seen from Table 1, NH₃ production has been achieved by the catalytic compositions of Examples 1 to 8. Reproducible NH₃ production could be verified at different base concentrations, with and without carrier material and using 2 different forming gas compositions. However, Comparative Example 1 missing a pre-ligand, Comparative Example 2 missing a vanadium compound, and Comparative Example 3 using N₂ gas instead of forming gas did not exhibit NH₃ production.

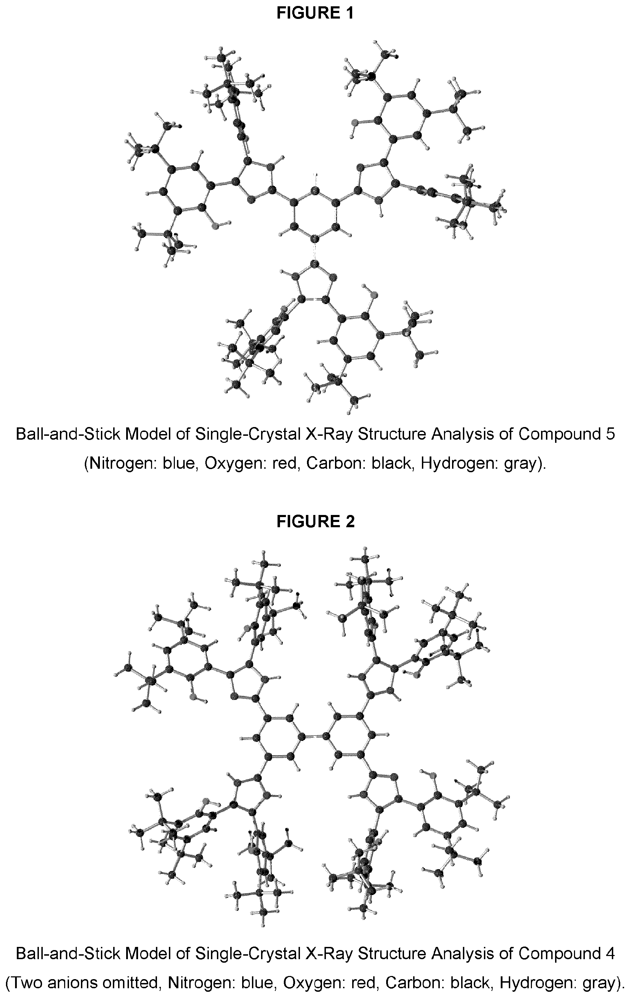

## Claims

1. Catalytic composition, comprising
a vanadium compound, preferably a molecular vanadium oxide halide complex,
a pre-ligand **characterized by** imidazole fragments with two ortho-phenol substituents represented by any one of the following formulas (1) or (2) or (3) or (4) or (5) or (6) or (7) or (8) or (9) or (10) or (11) or (12) or (13) or (14) or (15) or (16) or (17) or (18) or (19) or (20) or (21) or (22) or (23), and
a base with an alkaline metal or an alkaline earth metal, 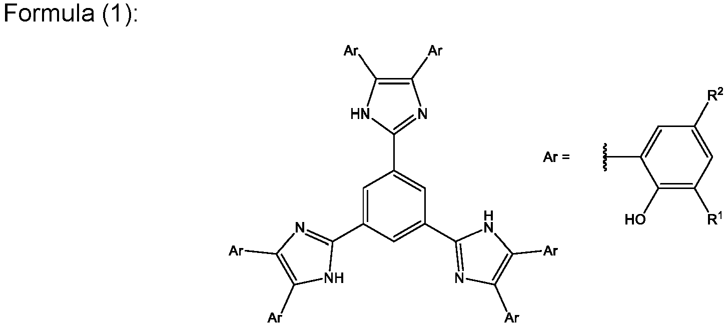 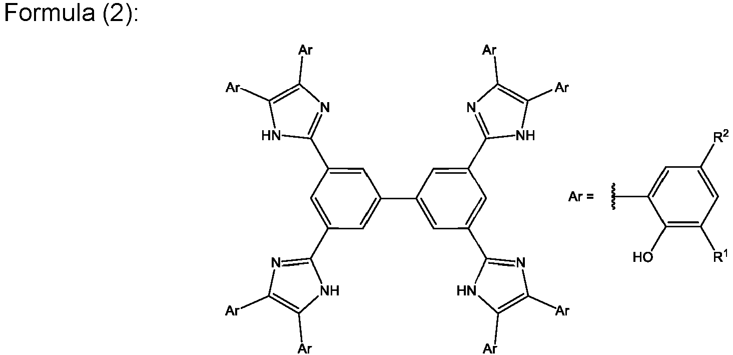 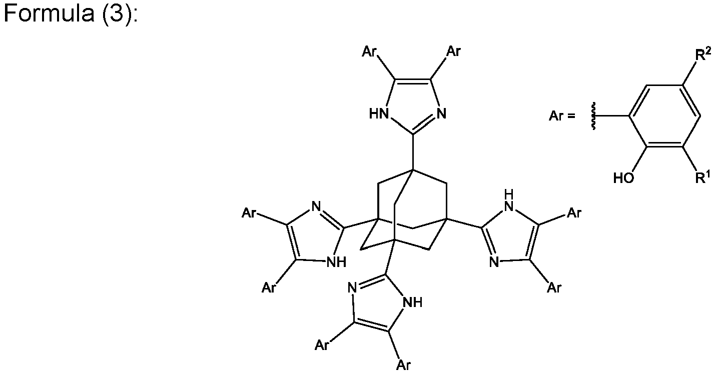 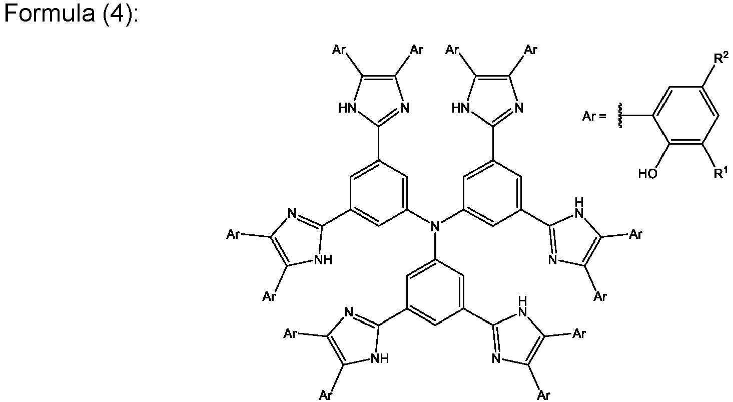 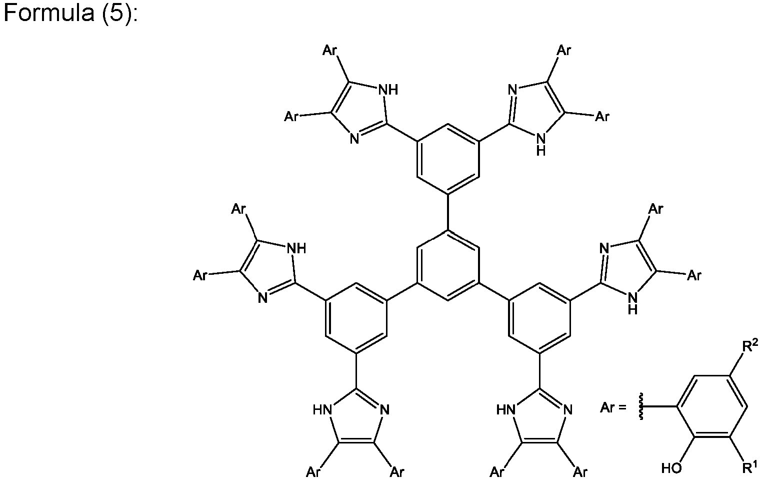 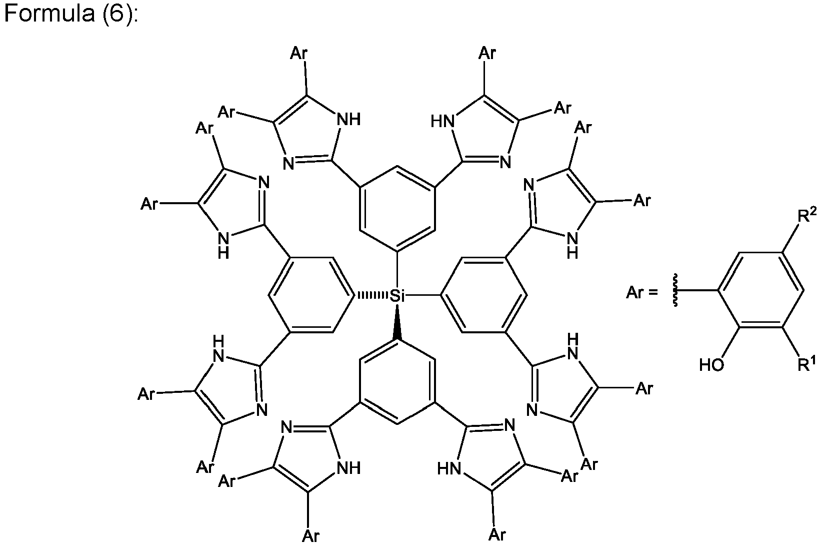 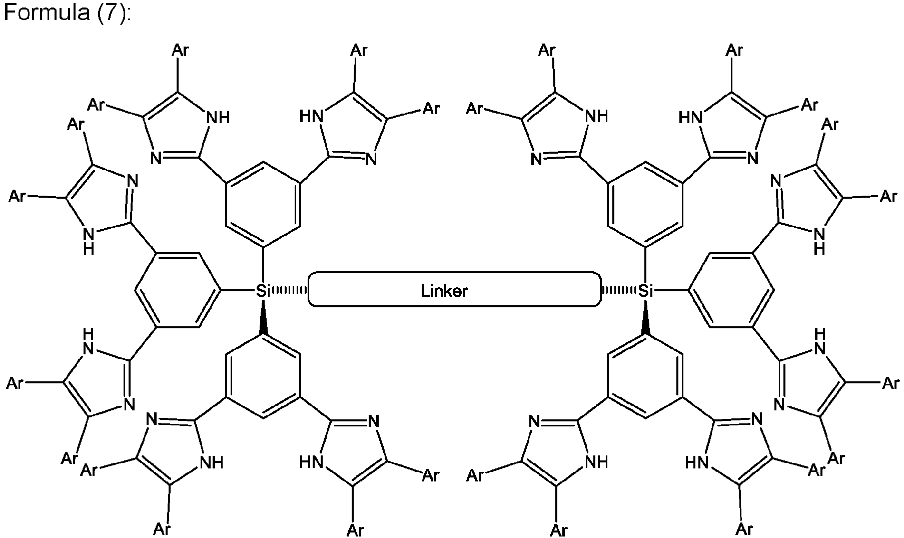 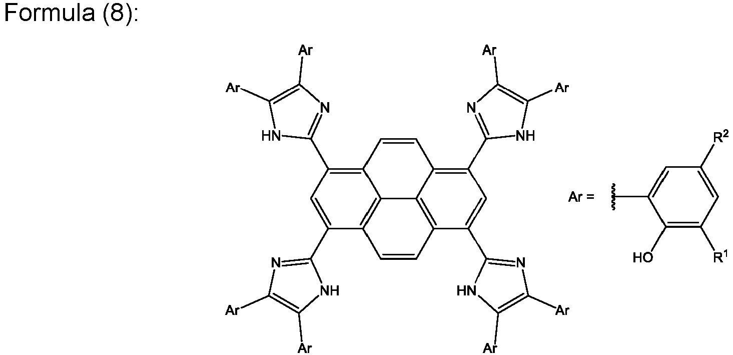 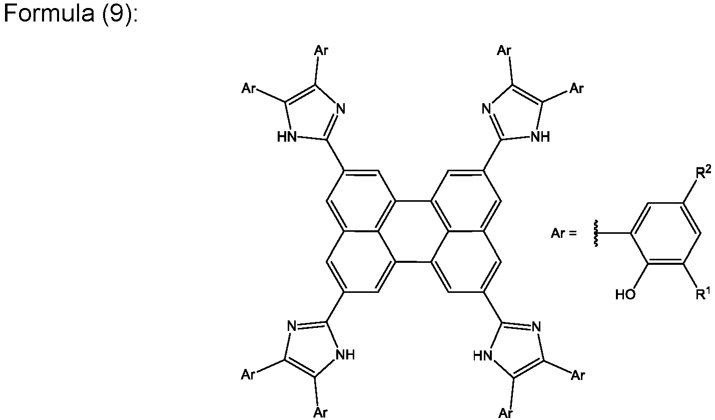 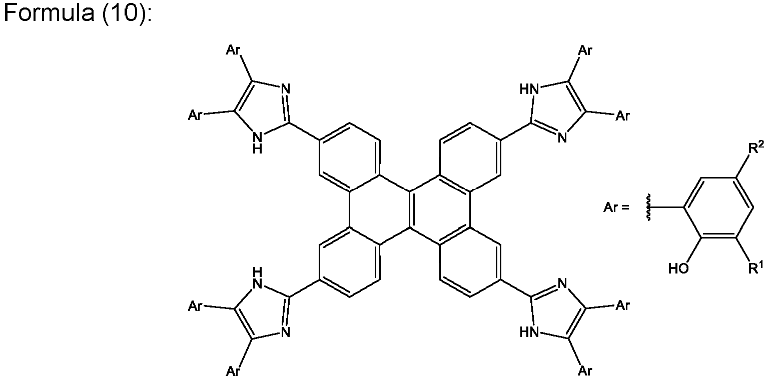 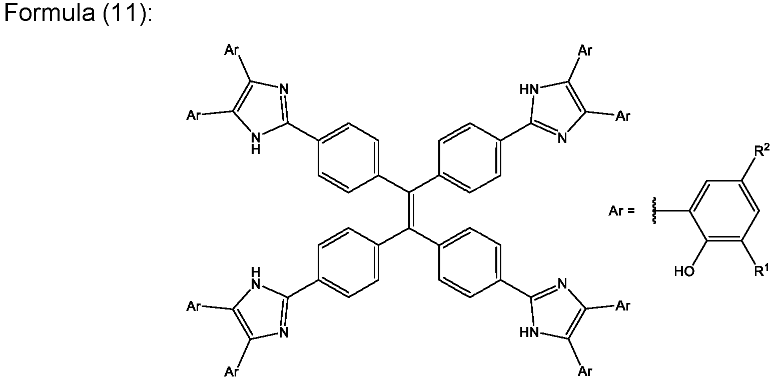 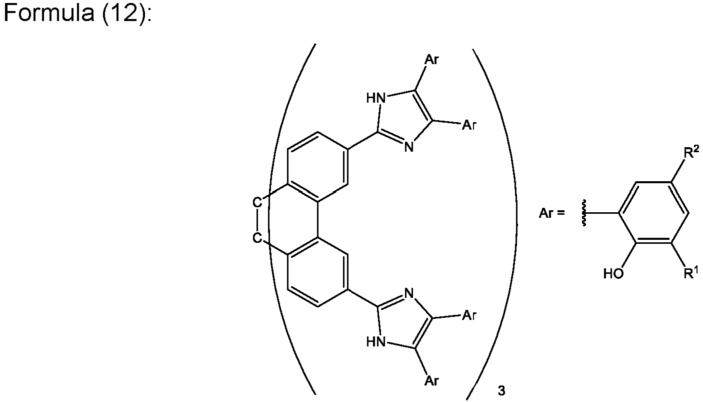 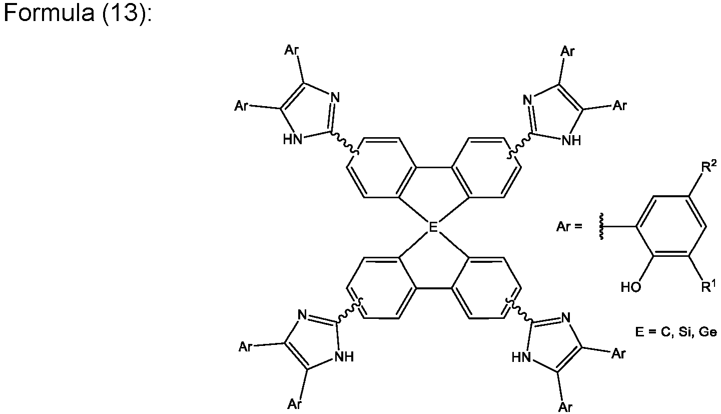 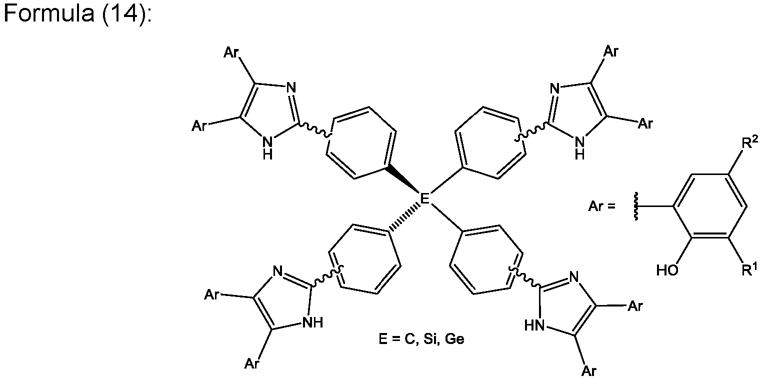 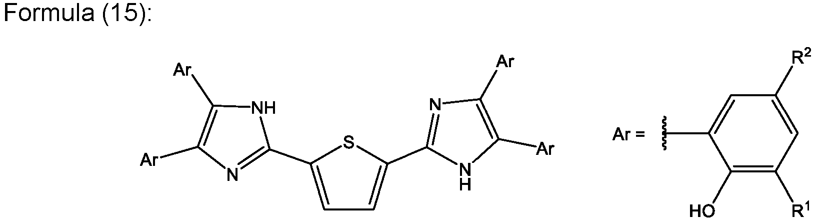 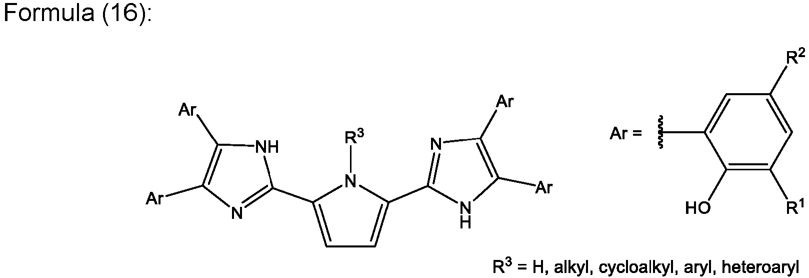 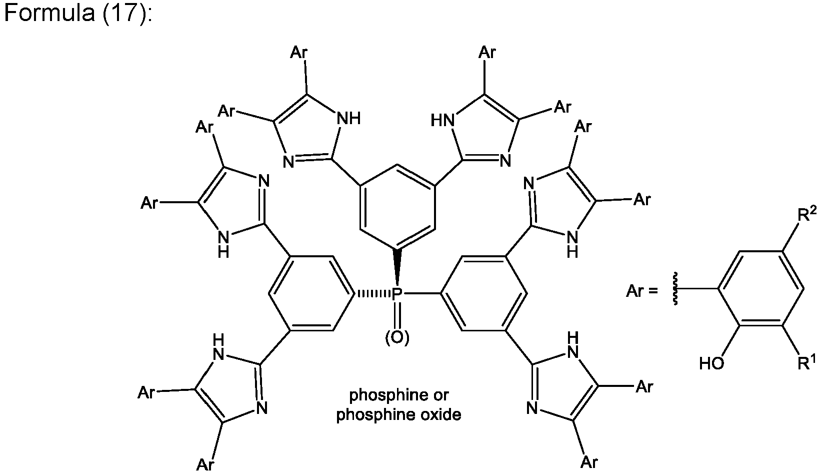 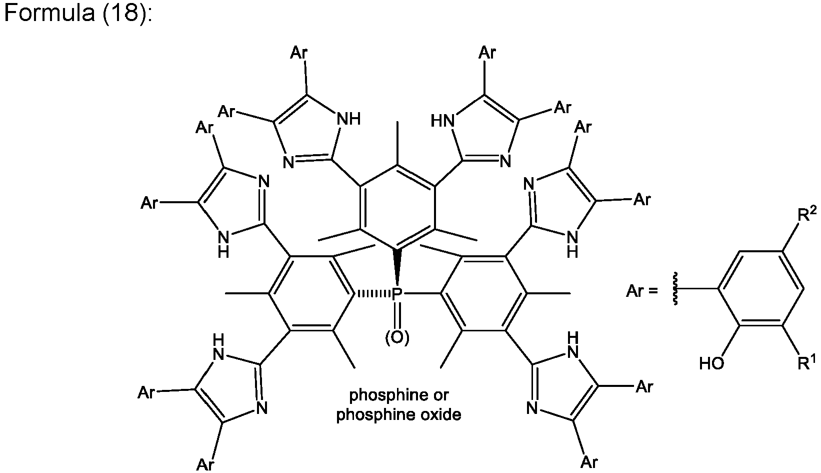 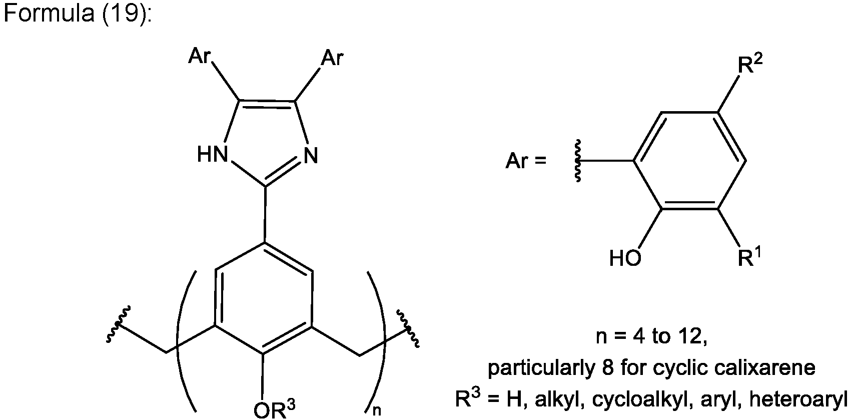 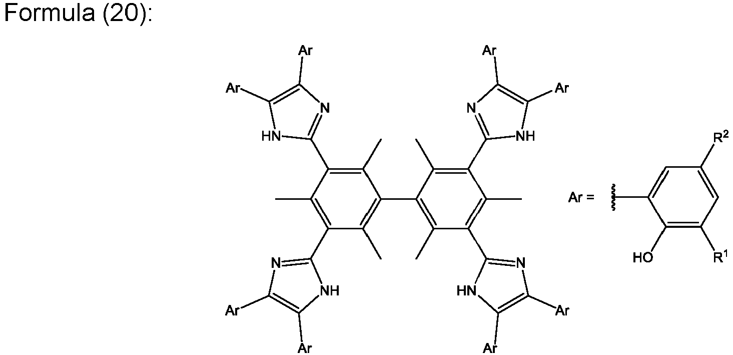 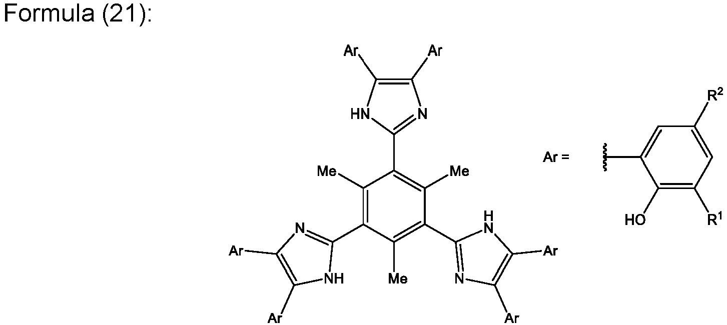 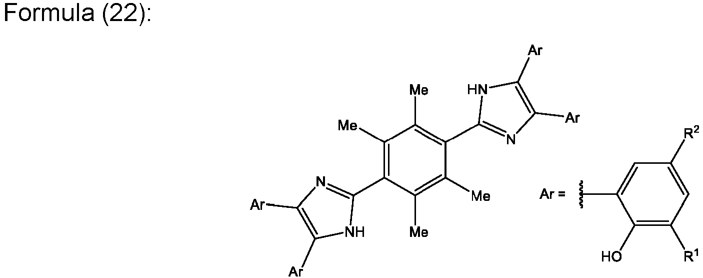 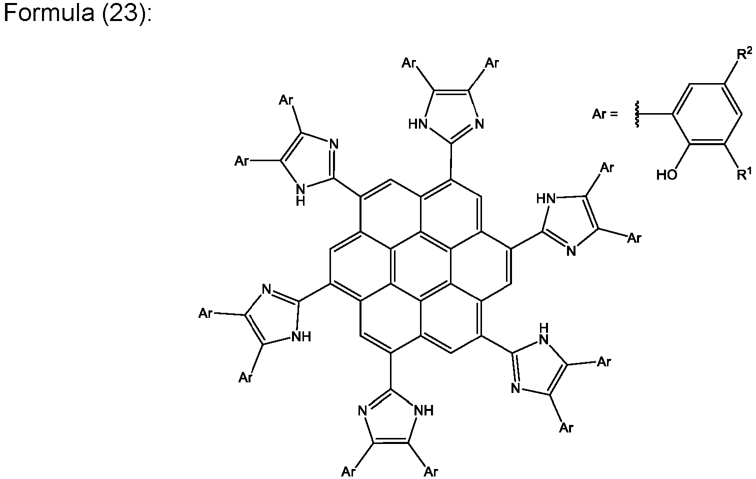
wherein E is a carbon atom or silicon atom or germanium atom and Ar is an *ortho-*hydroxyphenyl substituent with the 2-substituent R¹ and 4-substituent R², wherein R¹ is a branched or unbranched alkyl, aryl, alkylated/arylated silyl, heteroaryl group; and R² is H, branched or unbranched alkyl, aryl, alkylated/ arylated silyl, heteroaryl group; and R³ is hydrogen, alkyl, cycloalkyl, aryl or heteroaryl; and wherein a linker is a bivalent molecular organic fragment.

2. Catalytic composition according to claim 1, wherein the base is a base containing a metal selected from the group consisting of lithium, sodium, potassium, magnesium, and calcium.

3. Catalytic composition according to claim 1 or 2, wherein the base is a metal hydride such as potassium hydride, or a metal salt of a branched or unbranched alkyl compound or of an aryl compound such as a butyllithium or methyllithium or phenyllithium.

4. Catalytic composition according to any one of claims 1 to 3, wherein a carrier material such as graphite, soot, celite, silica gel, aluminium oxide, an aluminosilicate, a vanadium oxide, or titanium dioxide is used to achieve a large active surface of the catalyst composition.

5. Catalytic composition according to any one of claims 1 to 4, comprising two or more equivalents of a vanadium precursor compound for each imidazole substituent and at least an equivalent of metal base for each vanadium and each halide equivalent in the vanadium precursor complexes.

6. Use of the catalytic composition according to any one of claims 1 to 5 for the activation of N₂, reactions of N₂, activation of H₂, reactions of H₂, or reactions of alkynes and alkenes.

7. Use of the catalytic composition according to any one of claims 1 to 5 for the production of ammonia from the elements and for the production of H₂ and N₂ from ammonia.

8. A method for producing NH₃ from the elements N₂ and H₂ under reaction conditions of less than 200 bar and less than 300 °C using the catalytic composition according to any one of claims 1 to 5.

9. The method according to claim 8, wherein the method is conducted at less than 30 bar and less than 200 °C.

10. A method for producing organonitrogen compounds such as nitriles, amines, pyrroles, pyridines, annulated pyrroles and annulated pyridines from the element N₂ and alkenes or alkynes under reaction conditions of less than 200 bar and less than 300 °C using the catalytic composition according to any one of claims 1 to 5.

11. The method according to claim 10, with hydrogenation of one or more alkenes' or alkynes' carbon-carbon multiple bonds as a coupled reaction.

12. A method for the denitrification of organonitrogen compounds to N₂ or ammonia and organic products with lower nitrogen content under reaction conditions of less than 200 bar and less than 300 °C using the catalytic composition according to any one of claims 1 to 5.

13. A method for converting organonitrogen compounds such as nitriles, amines, pyrroles, pyridines, annulated pyrroles and annulated pyridines to N₂ and hydrocarbons under reaction conditions of less than 200 bar and less than 300 °C using the catalytic composition according to any one of claims 1 to 5.

14. Alkaline vanadium complexes or earth alkaline vanadium complexes with at least two 4,5-bis(*ortho*-hydroxyphenyl)imidazole-derived substituents at a central linker module that catalyze the N-N bond reduction by coordinated vanadium(IV) or the oxidation of two nitrides by coordinated vanadium(V) or both, 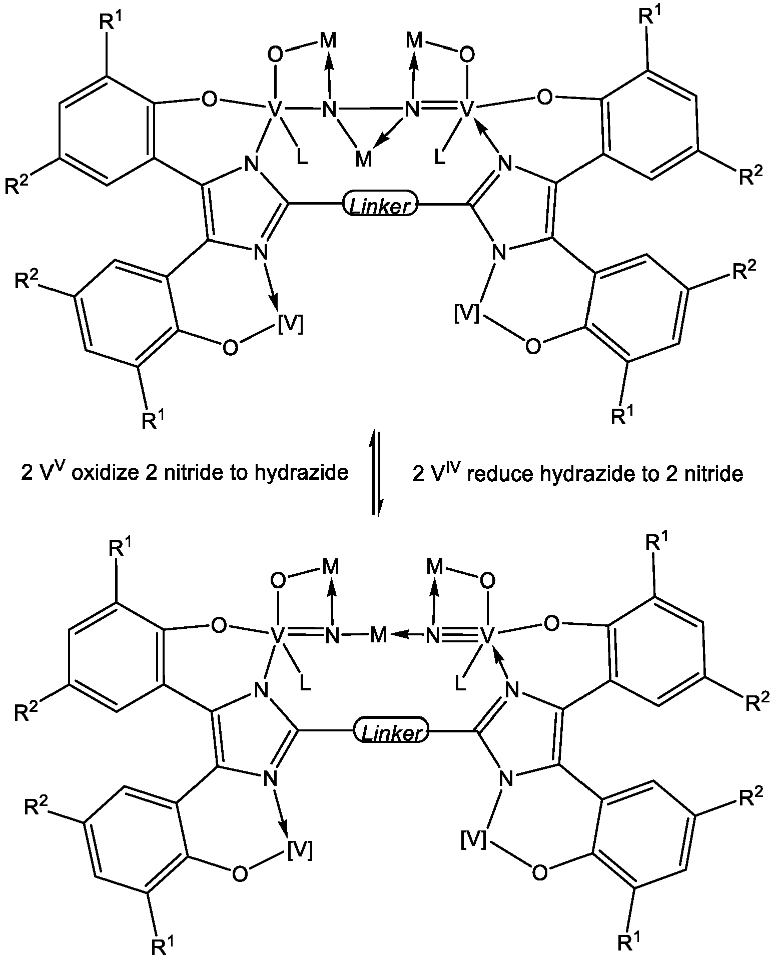
M = Li, Na, K, MgX, CaX; preferentially lithium
L = NH₂, NH₃ or free coordination site
[V] = Vanadium ion with further oxide, alkoxide, phenolate, nitride, imidate, amidate or ammine ligands
R¹ = alkyl, aryl, silyl, heteroaryl
R² = H, alkyl, aryl, silyl, heteroaryl
*Linker* = molecular fragment that comprises thermostable C-C, C-N, C-O, C-Si or C-P bonds,
and that as shown covalently connects two or more imidazole groups. General examples are alkylsilanes, arylsilanes, alkylarylsilanes, aryl ethers, arylamines, aryl phophines, aryl phosphine oxides, alkanes and cycloalkanes, aromatic and heteroaromatic systems, anellated aromatic and heteroaromatic systems. Specific examples are meta-phenylene, 3,3'-biphenylylene and 1,3-adamantandiyl.

## Patentansprüche

1. Katalysatorzusammensetzung, umfassend
eine Vanadiumverbindung, vorzugsweise einen molekularen Vanadiumoxidhalogenidkomplex,
einen Vorläuferliganden, der durch Imidazolfragmente mit zwei *ortho-*Phenolsubstituenten charakterisiert ist, der durch eine der folgenden Formeln (1) oder (2) oder (3) oder (4) oder (5) oder (6) oder (7) oder (8) oder (9) oder (10) oder (11) oder (12) oder (13) oder (14) oder (15) oder (16) oder (17) oder (18) oder (19) oder (20) oder (21) oder (22) oder (23) dargestellt wird, und
eine Base mit einem Alkalimetall oder einem Erdalkalimetall, 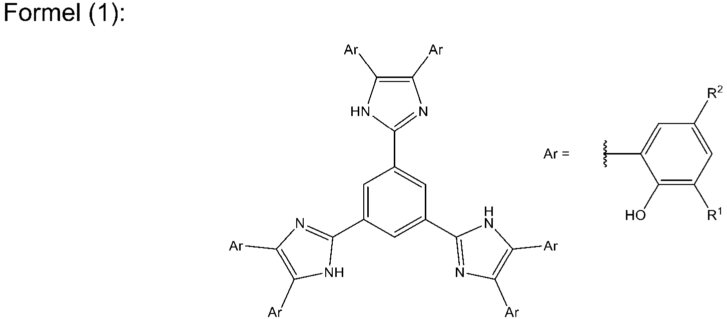 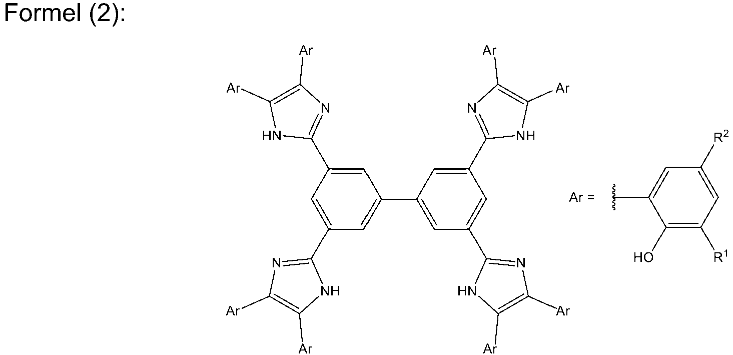 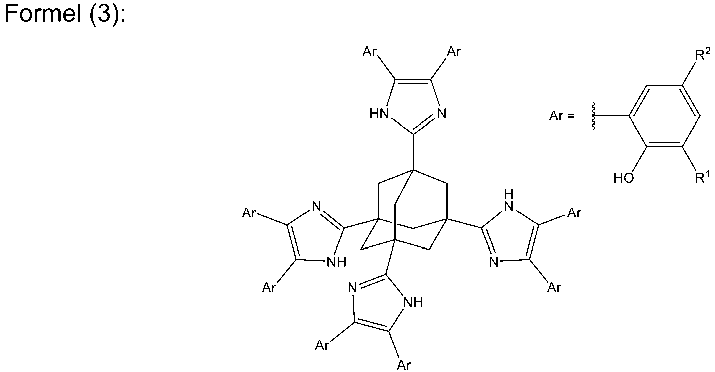 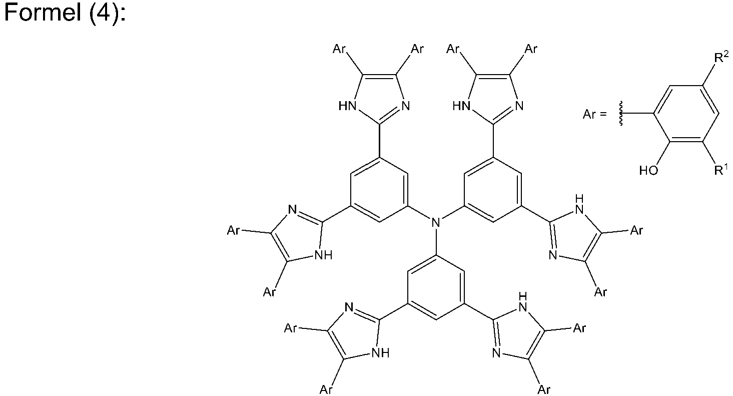 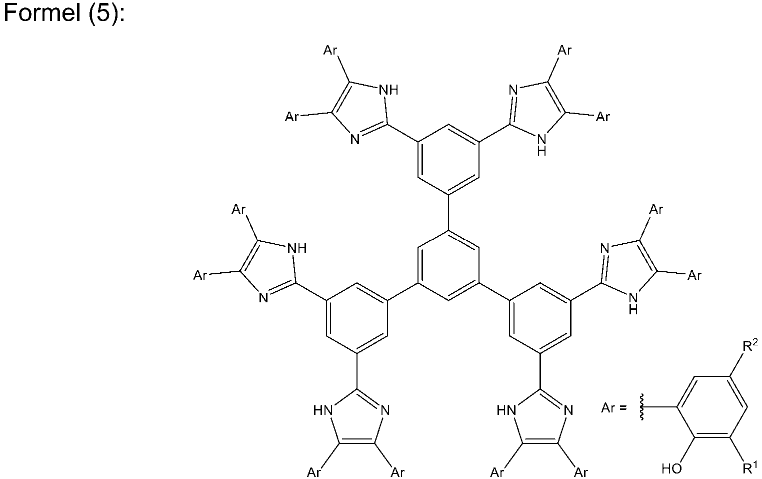 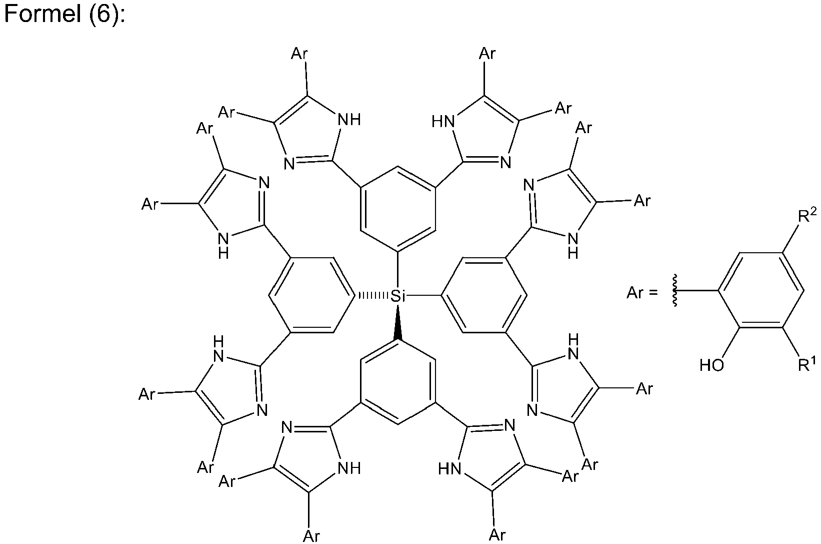 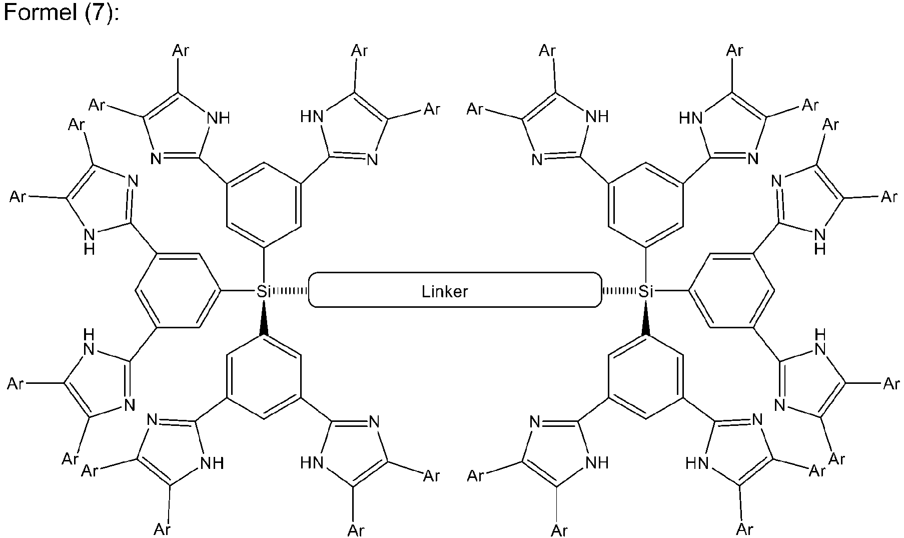 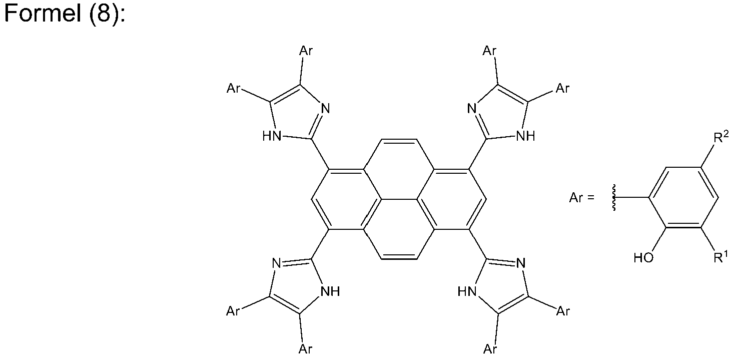 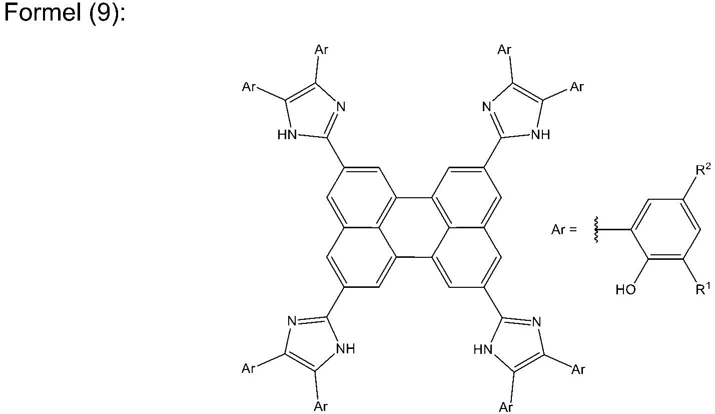 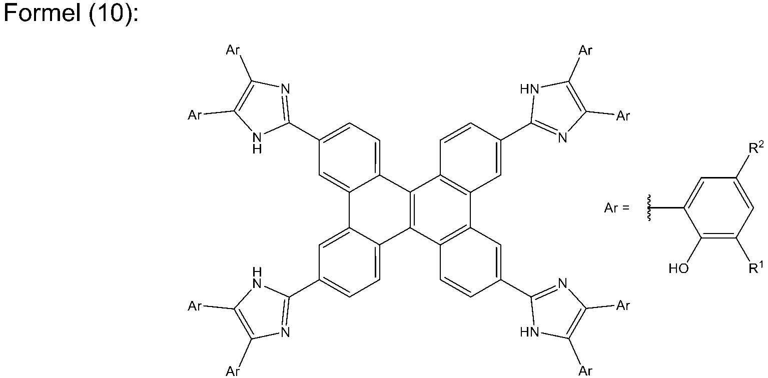 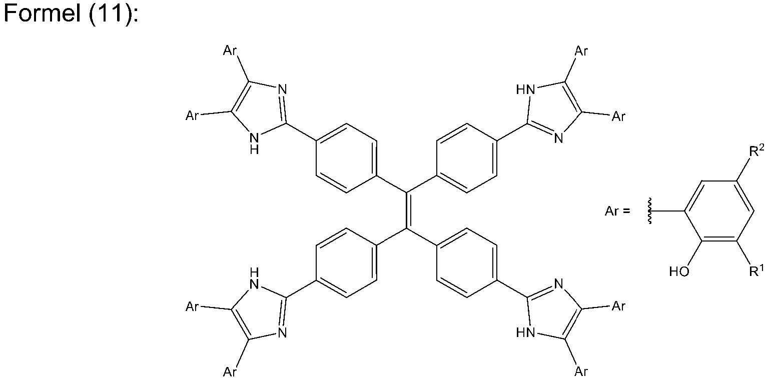 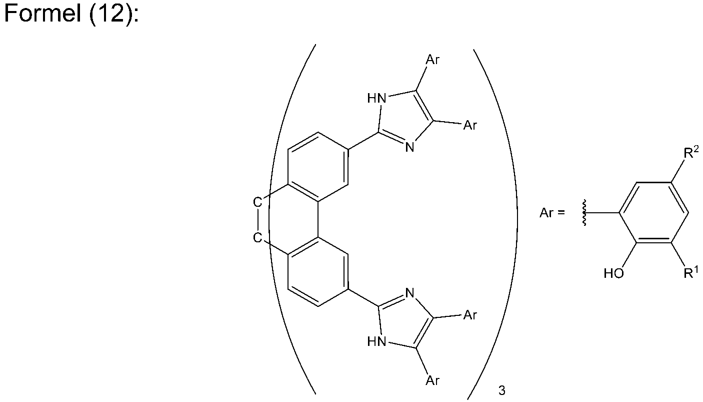 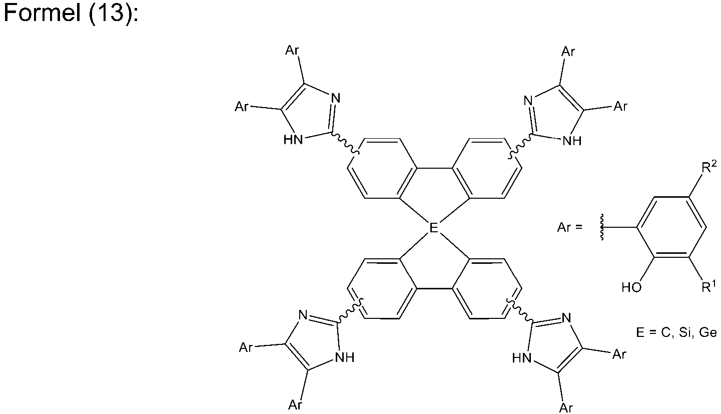 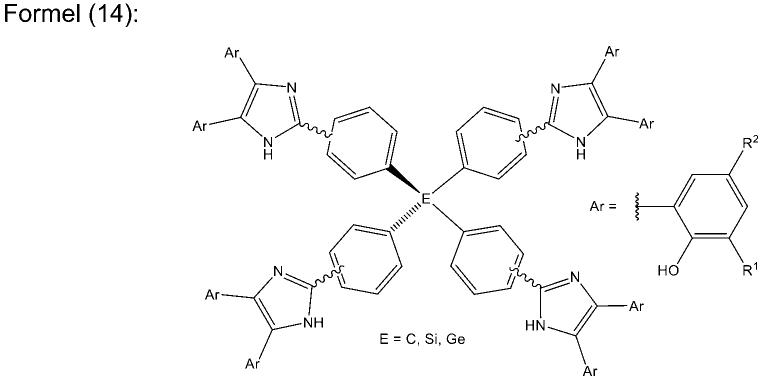 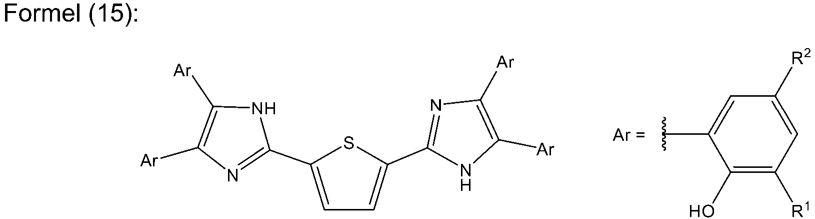 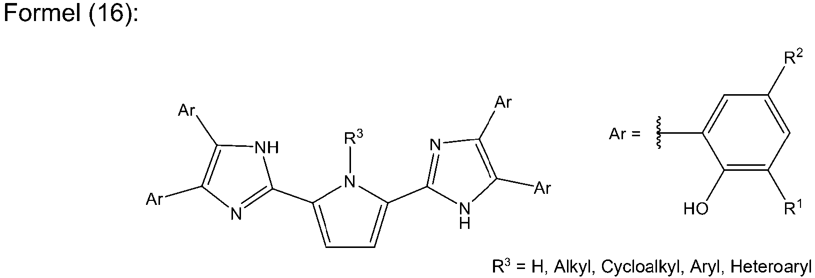 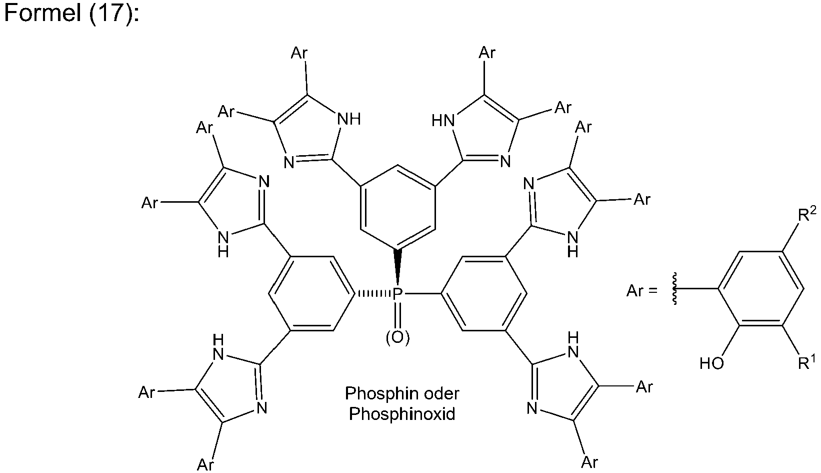 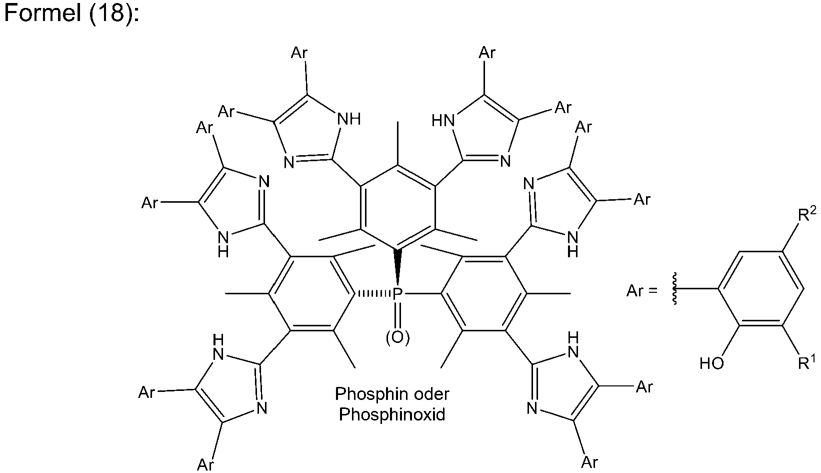 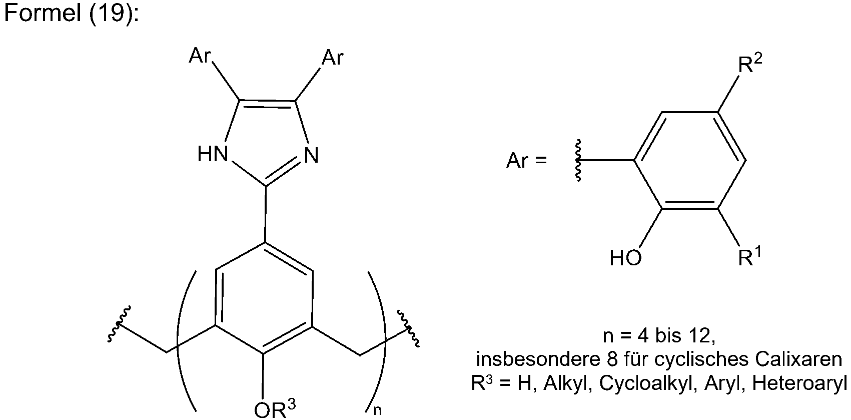 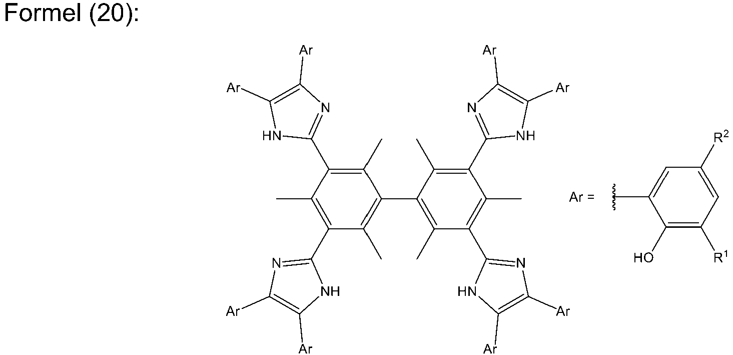 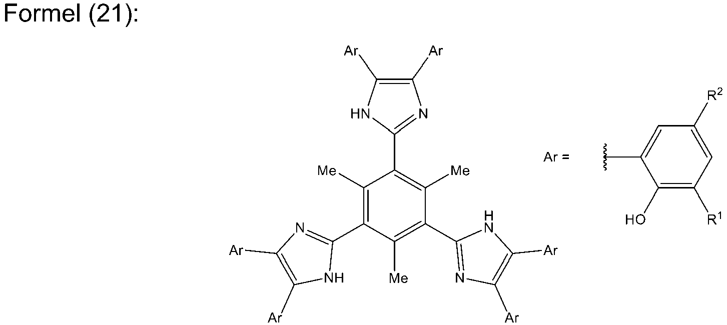 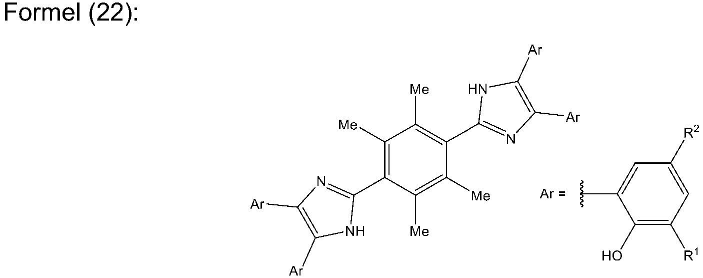 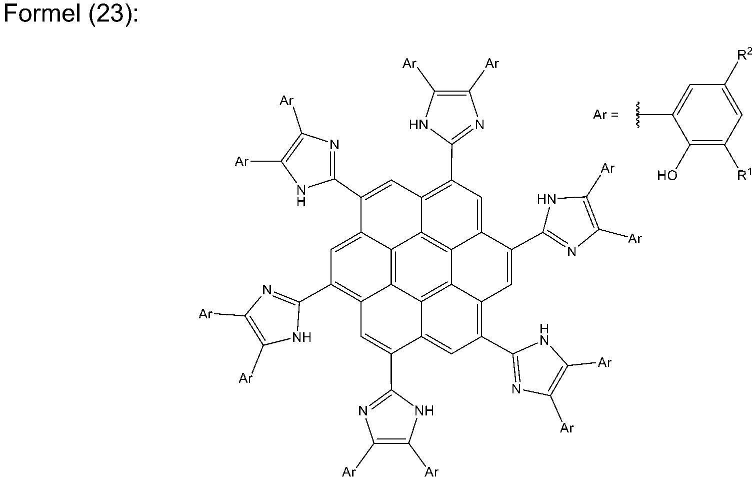
wobei E ein Kohlenstoffatom, Siliciumatom oder Germaniumatom ist und Ar ein *ortho-*Hydroxyphenylsubstituent mit dem 2-Substituenten R¹ und dem 4-Substituenten R² ist, wobei R¹ eine verzweigte oder unverzweigte Alkyl-, Aryl-, alkylierte/arylierte Silyl- oder Heteroarylgruppe ist; und R² H, eine verzweigte oder unverzweigte Alkyl-, Aryl-, alkylierte/arylierte Silyl- oder Heteroarylgruppe ist; und R³ Wasserstoff, Alkyl, Cycloalkyl, Aryl oder Heteroaryl ist; und wobei ein Linker ein bivalentes molekulares organisches Fragment ist.

2. Katalysatorzusammensetzung nach Anspruch 1, wobei die Base eine Base ist, die ein Metall enthält, das aus der Gruppe, bestehend aus Lithium, Natrium, Kalium, Magnesium und Calcium, ausgewählt ist.

3. Katalysatorzusammensetzung nach Anspruch 1 oder 2, wobei die Base ein Metallhydrid wie Kaliumhydrid oder ein Metallsalz einer verzweigten oder unverzweigten Alkylverbindung oder einer Arylverbindung wie Butyllithium oder Methyllithium oder Phenyllithium ist.

4. Katalysatorzusammensetzung nach einem der Ansprüche 1 bis 3, wobei ein Trägermaterial wie Graphit, Ruß, Celite, Kieselgel, Aluminiumoxid, ein Aluminosilikat, ein Vanadiumoxid oder Titandioxid verwendet wird, um eine große aktive Oberfläche der Katalysatorzusammensetzung zu erzielen.

5. Katalysatorzusammensetzung nach einem der Ansprüche 1 bis 4, umfassend zwei oder mehr Äquivalente einer Vanadium-Vorläuferverbindung für jeden Imidazol-Substituenten und mindestens ein Äquivalent einer Metallbase für jedes Vanadium- und jedes Halogenid-Äquivalent in den Vanadium-Vorläuferkomplexen.

6. Verwendung der Katalysatorzusammensetzung nach einem der Ansprüche 1 bis 5 zur Aktivierung von N₂, Reaktionen von N₂, Aktivierung von H₂, Reaktionen von H₂ oder Reaktionen von Alkinen und Alkenen.

7. Verwendung der Katalysatorzusammensetzung nach einem der Ansprüche 1 bis 5 zur Herstellung von Ammoniak aus den Elementen und zur Herstellung von H₂ und N₂ aus Ammoniak.

8. Verfahren zur Herstellung von NH₃ aus den Elementen N₂ und H₂ unter Reaktionsbedingungen von weniger als 200 bar und weniger als 300 °C unter Verwendung der Katalysatorzusammensetzung nach einem der Ansprüche 1 bis 5.

9. Verfahren nach Anspruch 8, wobei das Verfahren bei weniger als 30 bar und weniger als 200 °C durchgeführt wird.

10. Verfahren zur Herstellung von stickstoffhaltigen Organoverbindungen wie Nitrilen, Aminen, Pyrrolen, Pyridinen, anellierten Pyrrolen und anellierten Pyridinen aus dem Element N₂ und Alkenen oder Alkinen unter Reaktionsbedingungen von weniger als 200 bar und weniger als 300 °C unter Verwendung der Katalysatorzusammensetzung nach einem der Ansprüche 1 bis 5.

11. Verfahren nach Anspruch 10, mit Hydrierung von einer oder mehreren Kohlenstoff-Kohlenstoff-Mehrfachbindungen von Alkenen oder Alkinen als eine gekoppelte Reaktion.

12. Verfahren zur Denitrifikation von organischen Stickstoffverbindungen zu N₂ oder Ammoniak und organischen Produkten mit niedrigerem Stickstoffgehalt unter Reaktionsbedingungen von weniger als 200 bar und weniger als 300 °C unter Verwendung der Katalysatorzusammensetzung nach einem der Ansprüche 1 bis 5.

13. Verfahren zur Umwandlung von stickstoffhaltigen Organoverbindungen wie Nitrilen, Aminen, Pyrrolen, Pyridinen, anellierten Pyrrolen und anellierten Pyridinen in N₂ und Kohlenwasserstoffe unter Reaktionsbedingungen von weniger als 200 bar und weniger als 300 °C unter Verwendung der Katalysatorzusammensetzung nach einem der Ansprüche 1 bis 5.

14. Alkalische Vanadiumkomplexe oder Erdalkalivanadiumkomplexe mit mindestens zwei 4,5-Bis(*ortho*-hydroxyphenyl)imidazol-abgeleiteten Substituenten an einem zentralen Linkermodul, welche die N-N Bindungsreduktion durch koordiniertes Vanadium(IV) oder die Oxidation von zwei Nitriden durch koordiniertes Vanadium(V) oder beides katalysieren, 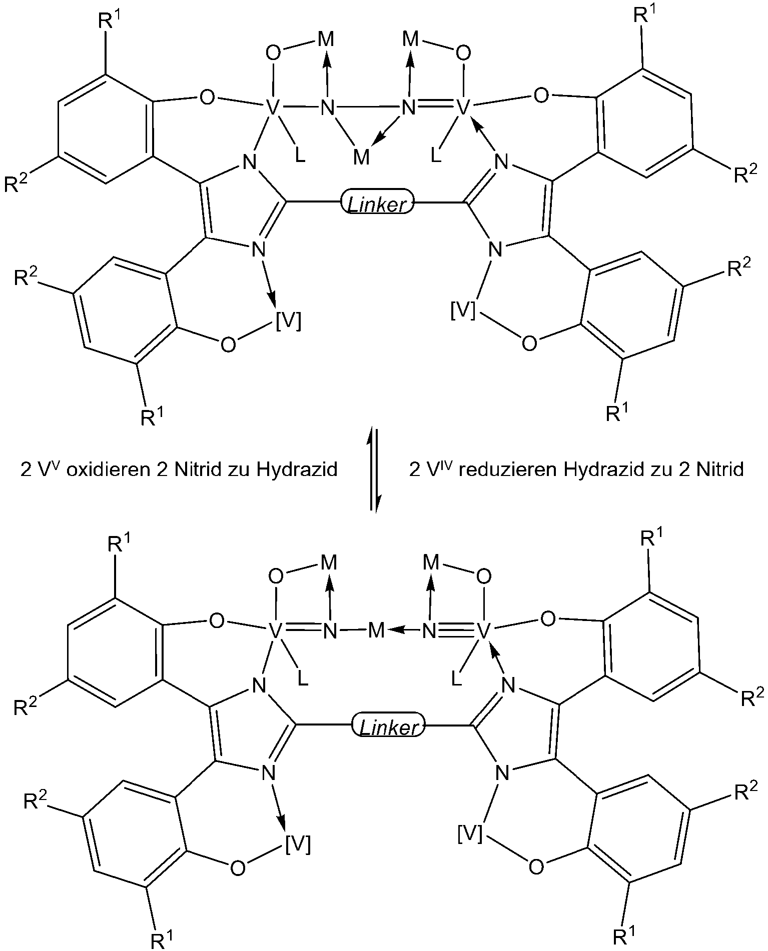
M = Li, Na, K, MgX, CaX; vorzugsweise Lithium
L = NH₂, NH₃ oder freie Koordinationstelle
[V] = Vanadiumion mit weiteren Oxid-, Alkoxid-, Phenolat-, Nitrid-, Imidat-, Amidat- oder Ammin-Liganden
R¹ = Alkyl, Aryl, Silyl, Heteroaryl
R² = H, Alkyl, Aryl, Silyl, Heteroaryl
*Linker* = molekulares Fragment, das thermisch stabile C-C-, C-N-, C-O-, C-Si- oder C-P-Bindungen umfasst, und das, wie dargestellt, zwei oder mehr Imidazol-Gruppen kovalent verknüpft. Allgemeine Beispiele sind Alkylsilane, Arylsilane, Alkylarylsilane, Arylether, Arylamine, Arylphosphine, Arylphosphinoxide, Alkane und Cycloalkane, aromatische und heteroaromatische Systeme, anellierte aromatische und heteroaromatische Systeme. Besondere Beispiele sind meta-Phenylen, 3,3'-Biphenylylen und 1,3-Adamantandiyl.

## Revendications

1. Composition catalytique, comprenant
un composé de vanadium, de préférence un complexe d'halogénure d'oxyde de vanadium moléculaire,
un pré-ligand **caractérisé par** des fragments d'imidazole avec deux substituants *ortho*-phénol représentés par l'une quelconque des formules suivantes (1) ou (2) ou (3) ou (4) ou (5) ou (6) ou (7) ou (8) ou (9) ou (10) ou (11) ou (12) ou (13) ou (14) ou (15) ou (16) ou (17) ou (18) ou (19) ou (20) ou (21) ou (22) ou (23), et
une base avec un métal alcalin ou un métal alcalino-terreux, 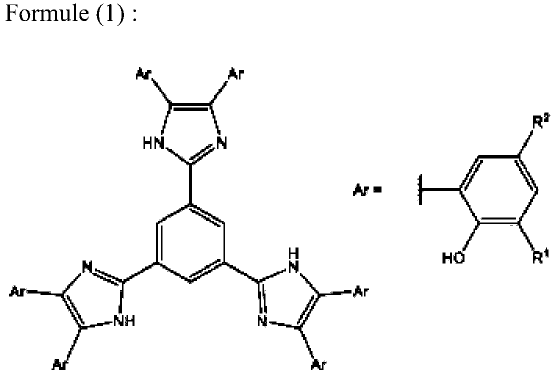 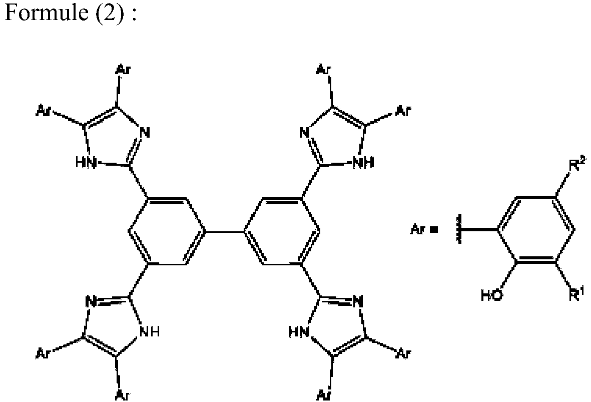 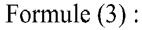 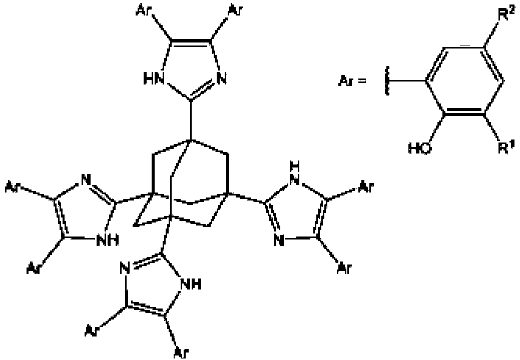 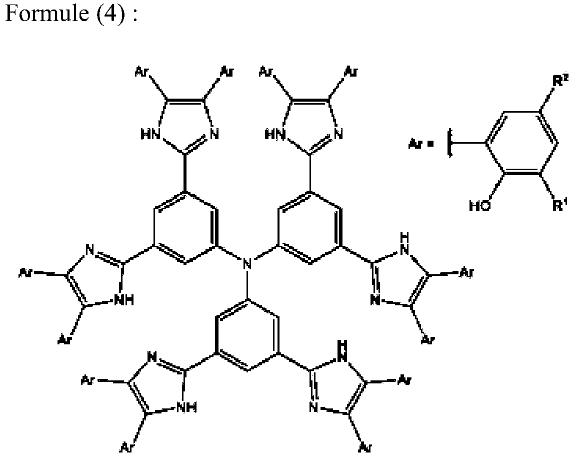 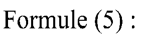 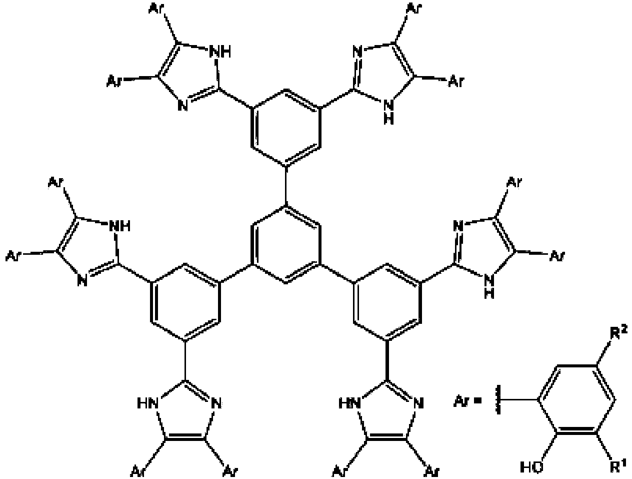 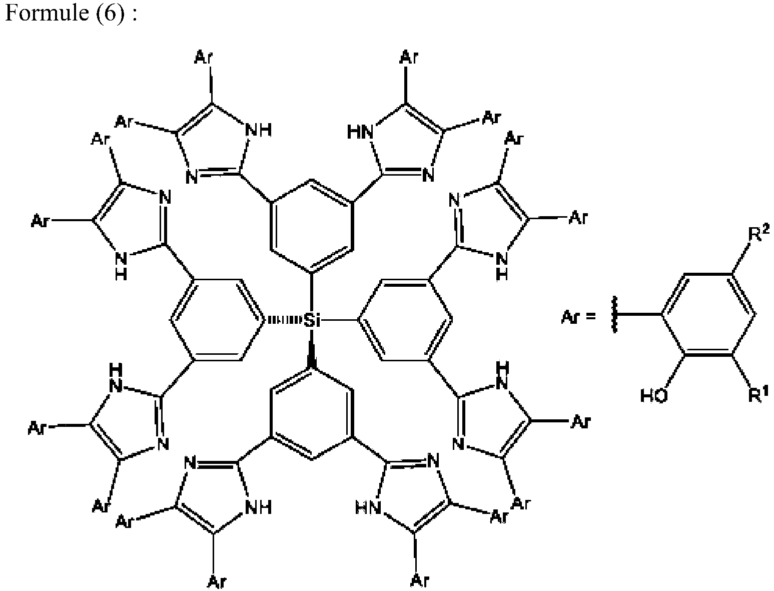 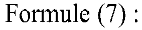 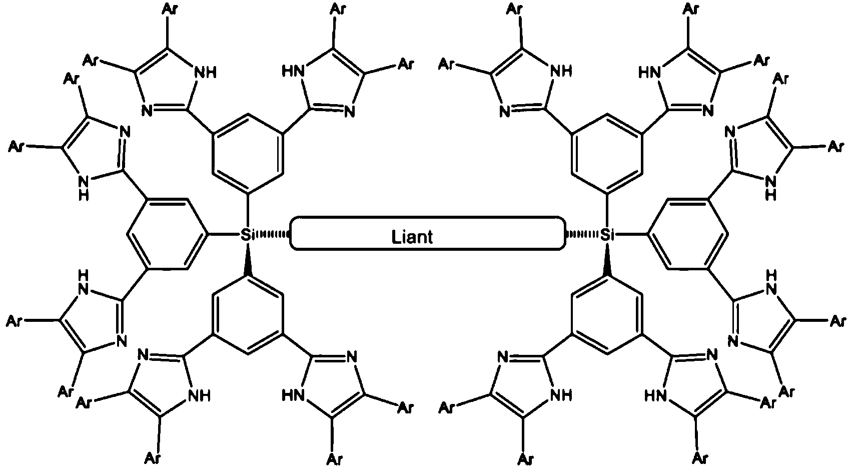 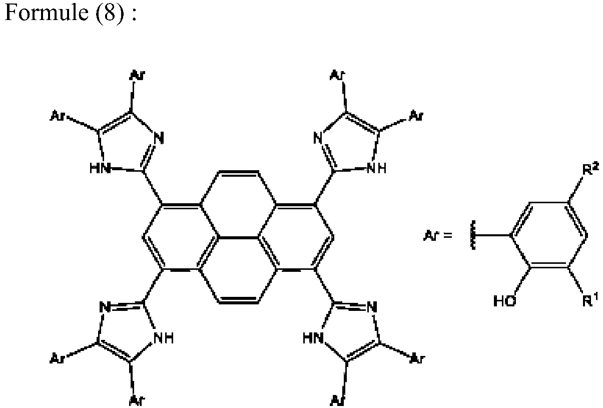 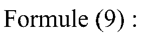 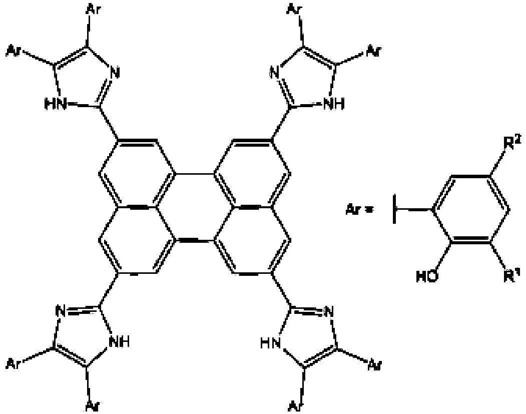 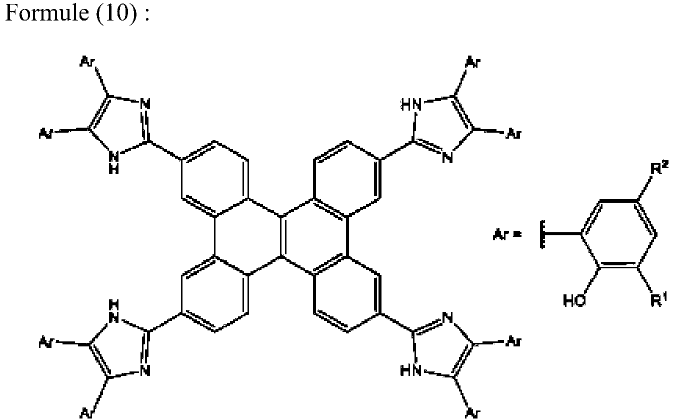 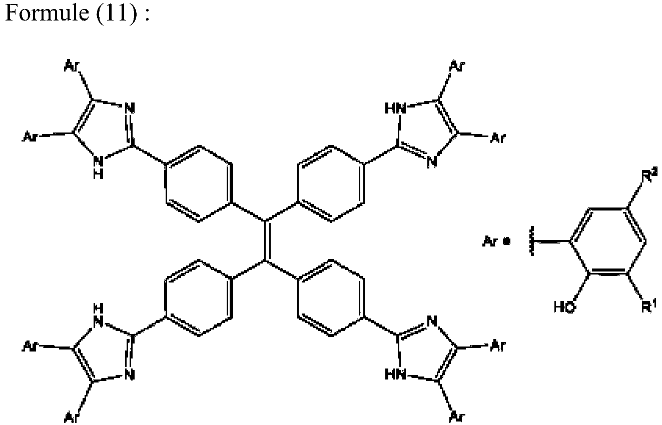 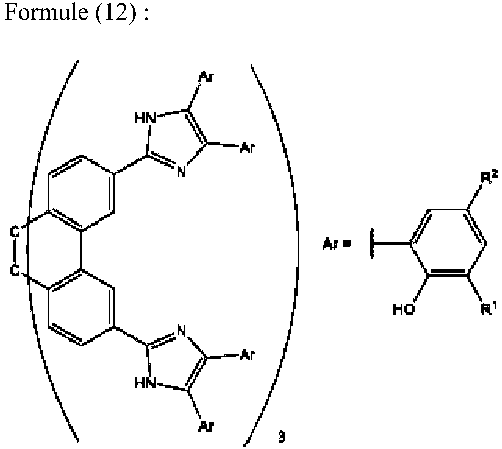 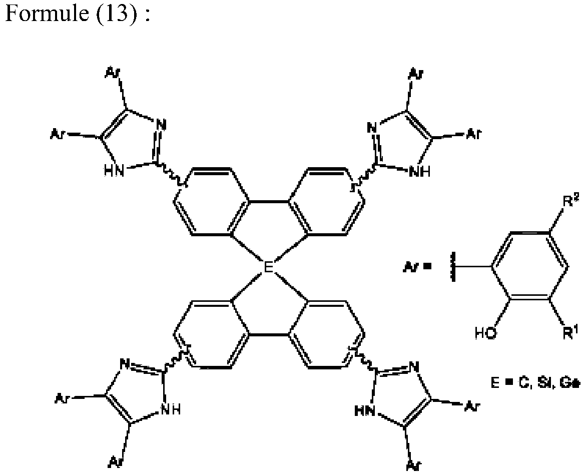 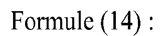 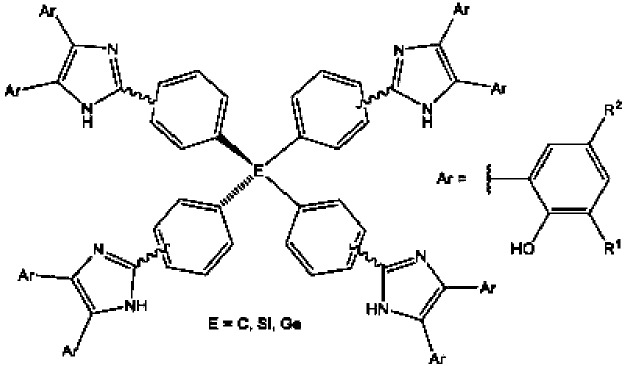 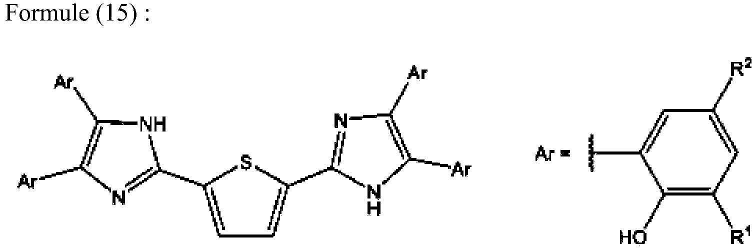 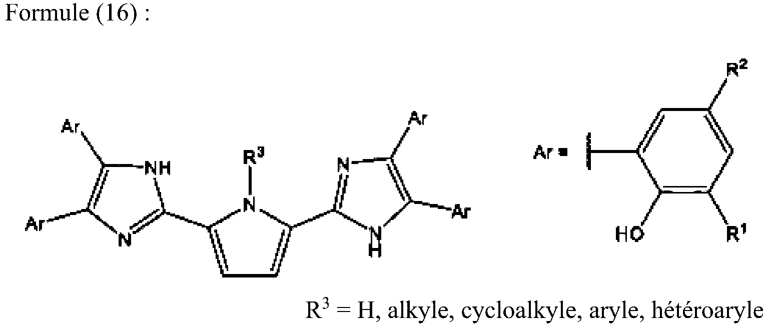 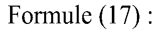 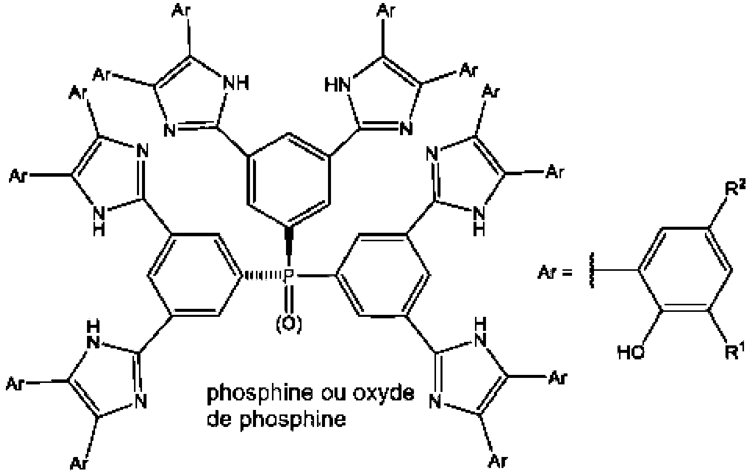 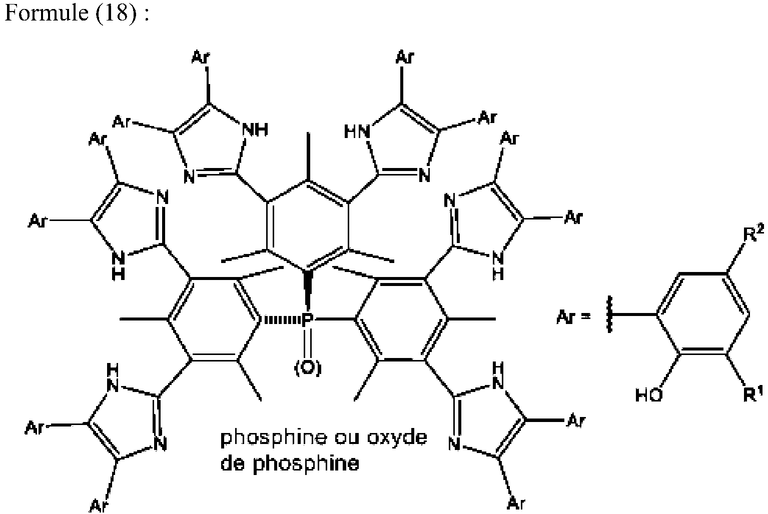 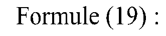 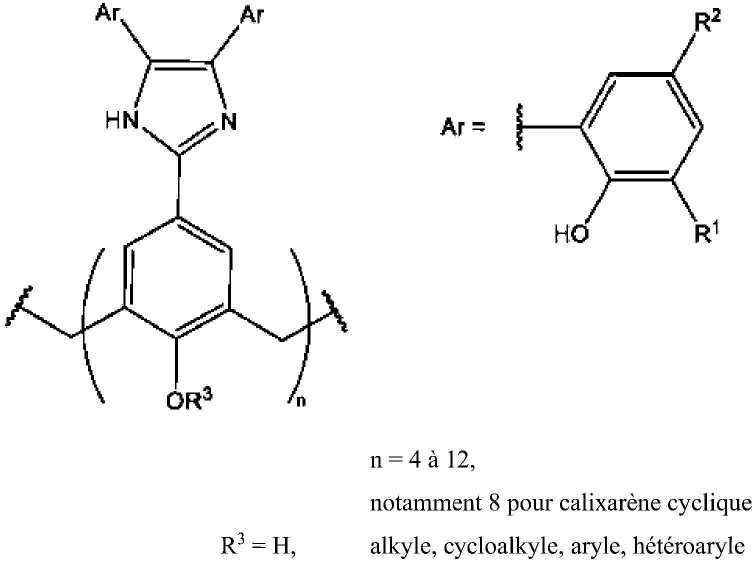 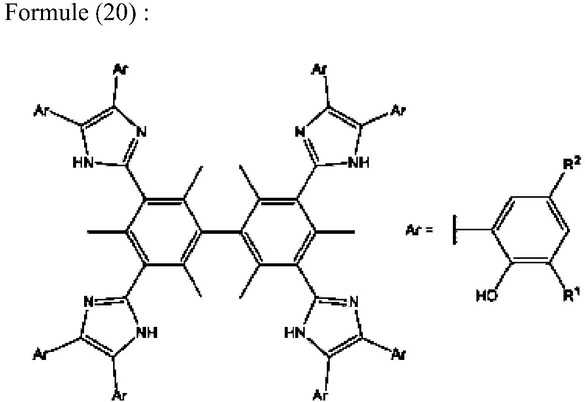 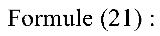 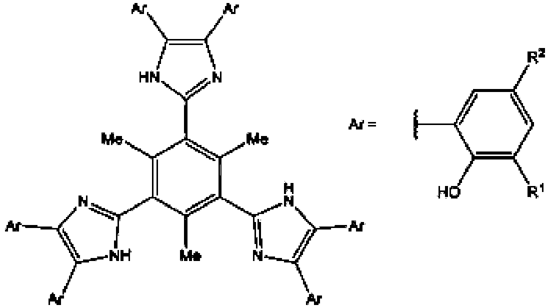 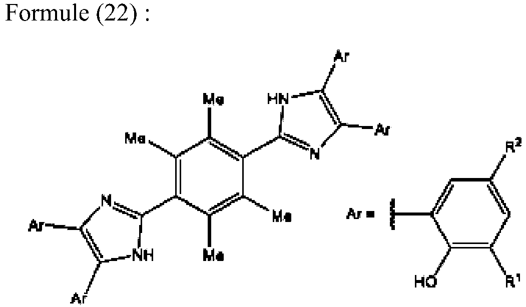 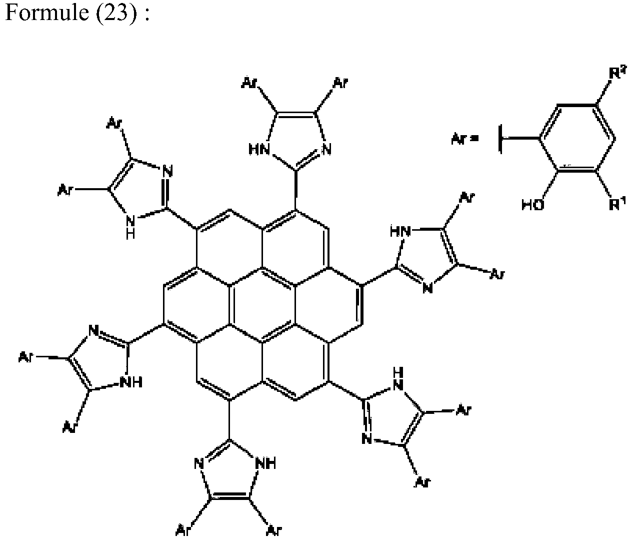
dans lesquelles E est un atome de carbone ou atome de silicium ou atome de germanium et Ar est un substituant *ortho*-hydroxyphényle avec le 2-substituant R¹ et 4-substituant R², dans lesquelles R¹ est un groupe alkyle, aryle, silyle alkylé/arylé, hétéroaryle ramifié ou non ramifié ; et R² est H, un groupe alkyle, aryle, silyle alkylé/arylé, hétéroaryle ramifié ou non ramifié ; et R³ est hydrogène, alkyle, cycloalkyle, aryle ou hétéroaryle ; et dans lesquelles un liant est un fragment organique moléculaire bivalent.

2. Composition catalytique selon la revendication 1, dans laquelle la base est une base contenant un métal sélectionné parmi le groupe constitué du lithium, sodium, potassium, magnésium et calcium.

3. Composition catalytique selon la revendication 1 ou 2, dans laquelle la base est un hydrure métallique tel que l'hydrure de potassium, ou un sel métallique d'un composé d'alkyle ramifié ou non ramifié ou d'un composé d'aryle tel qu'un butyllithium ou méthyllithium ou phényllithium.

4. Composition catalytique selon l'une quelconque des revendications 1 à 3, dans laquelle un matériau de support tel que le graphique, la suie, la célite, le gel de silice, l'oxyde d'aluminium, un aluminosilicate, un oxyde de vanadium ou le dioxyde de titane est utilisé pour obtenir une grande surface active de la composition de catalyseur.

5. Composition catalytique selon l'une quelconque des revendications 1 à 4, comprenant deux équivalents ou plus d'un composé précurseur de vanadium pour chaque substituant d'imidazole et au moins un équivalent d'une base métallique pour chaque équivalent de vanadium et chaque équivalent d'halogénure dans les complexes précurseurs de vanadium.

6. Utilisation de la composition catalytique selon l'une quelconque des revendications 1 à 5 pour l'activation de N₂, des réactions de N₂, l'activation de H₂, des réactions de H₂ ou des réactions d'alcynes et d'alcènes.

7. Utilisation de la composition catalytique selon l'une quelconque des revendications 1 à 5 pour la production d'ammoniaque à partir des éléments et pour la production de H₂ et N₂ à partir d'ammoniaque.

8. Procédé de production de NH₃ à partir des éléments N₂ et H₂ dans des conditions réactionnelles de moins de 200 bar et moins de 300 °C en utilisant la composition catalytique selon l'une quelconque des revendications 1 à 5.

9. Procédé selon la revendication 8, dans lequel le procédé est réalisé à moins de 30 bar et moins de 200 °C.

10. Procédé de production de composés organo-azotés tels que des nitriles, amines, pyrroles, pyridines, pyrroles annelés et pyridines annelées à partir de l'élément N₂ et d'alcènes ou d'alcynes dans des conditions réactionnelles de moins de 200 bar et moins de 300 °C en utilisant la composition catalytique selon l'une quelconque des revendications 1 à 5.

11. Procédé selon la revendication 10, avec hydrogénation d'une ou plusieurs liaisons multiples carbone-carbone d'alcènes ou d'alcynes en tant que réaction couplée.

12. Procédé de dénitrification de composés organo-azotés en N₂ ou ammoniaque et produits organiques avec une teneur en azote inférieure dans des conditions réactionnelles de moins de 200 bar et moins de 300 °C en utilisant la composition catalytique selon l'une quelconque des revendications 1 à 5.

13. Procédé de conversion de composés organo-azotés tels que des nitriles, amines, pyrroles, pyridines, pyrroles annelés et pyridines annelées en N₂ et hydrocarbures dans des conditions réactionnelles de moins de 200 bar et moins de 300 °C en utilisant la composition catalytique selon l'une quelconque des revendications 1 à 5.

14. Complexes de vanadium alcalins ou complexes de vanadium alcalino-terreux avec au moins deux substituants dérivés par du 4,5-bis(*ortho-*hydroxyphényl)imidazole au niveau d'un module de liant central qui catalysent la réduction de liaison N-N par du vanadium(IV) coordonné ou l'oxydation de deux nitrures par du vanadium(V) coordonné ou les deux, 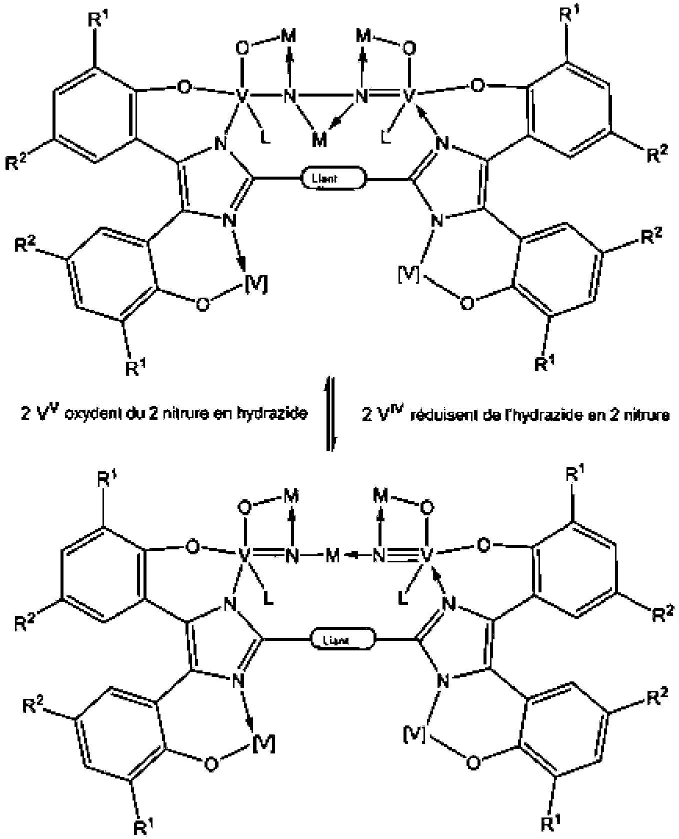
M = Li, Na, K, MgX, CaX ; de préférence lithium
L = NH₂, NH₃ ou site de coordination libre
[V] = ion vanadium avec autres ligands oxyde, alcoxyde, phénolate, nitrure, imidate, amidate ou ammine
R¹ = alkyle, aryle, silyle, hétéroaryle
R² = H, alkyle, aryle, silyle, hétéroaryle
*Liant* = fragment moléculaire qui comprend des liaisons C-C, C-N, C-O, C-Si ou C-P thermostables et qui connecte par covalence tel qu'illustré deux groupes imidazole ou plus. Des exemples généraux sont des alkylsilanes, arylsilanes, alkylarylsilanes, éthers aryliques, arylamines, arylphosphines, oxydes d'arylphosphine, alcanes et cycloalcanes, systèmes aromatiques et hétéroaromatiques, systèmes aromatiques et hétéroaromatiques annelés. Des exemples spécifiques sont le *méta*-phénylène, 3,3'-biphénylynène et 1,3-adamantandiyle.
